# EUROPÄISCHE PATENTSCHRIFT

(11) **EP 3 028 804 B1**
(45) Veröffentlichungstag und Bekanntmachung des Hinweises auf die Patenterteilung: **22.02.2017**
(21) Anmeldenummer: 14196366.0
(22) Anmeldetag: 04.12.2014
(51) Int. Cl.: B23Q 1/00, B23B 31/28

(54) **Übertragungsanordnung, insb. zur Energie- und/oder Signalübertragung**
Transmission device, in particular for energy and/or signal transmission
Agencement de transmission, en particulier la transmission d'énergie et/ou de signal

(43) Veröffentlichungstag der Anmeldung: 08.06.2016
(73) Patentinhaber: SMW-AUTOBLOK Spannsysteme GmbH, 88074 Meckenbeuren (DE)
(72) Erfinder: Maurer, Eckhard, 88094 Oberteuringen (DE)
(74) Vertreter: Zech, Stefan Markus

(56) Entgegenhaltungen:
- EP-A1- 2 837 466
- EP-A2- 1 182 006
- WO-A2-2013/023823
- AT-A4- 513 629
- DE-C1- 3 727 445
- JP-A- 2011 121 148
- US-A- 3 998 108
- US-A1- 2009 080 990

## Beschreibung

Die Erfindung betrifft eine Übertragungsanordnung, insbesondere zur Energie- und/oder Signalübertragung, insbesondere zur Verwendung in einem Bearbeitungszentrum bzw. einem Dreh- und/oder Fräszentrum, wobei die Übertragungsanordnung eine Spanneinheit, eine Konsole mit einem darin drehbar gelagerten Drehtisch und erste und zweite Übertragungseinrichtungen umfasst.

In Bearbeitungszentren werden Werkstücke und Werkzeuge relativ zueinander bewegt, um ein auf einem Maschinentisch aufgespanntes Werkstück spanend zu bearbeiten. Aus dem Stand der Technik ist es bekannt, eine Spanneinrichtung mit einem Spannfutter zum Spannen eines Werkzeugs oder eines Werkstücks über eine Steckerverbindung an eine Stromversorgung oder eine Maschinensteuerung anzuschließen. Für rotierende Spannfutter sind neben Steckerverbindungen auch Schleifkontakte bekannt, die allerdings prinzipbedingt einem starken Verschleiß unterliegen. Über Stecker ist eine Verbindung nur bei stillstehendem Spannfutter möglich, oder die Bewegungsfreiheitsgrade der Spanneinrichtung sind im rotierenden Betrieb stark eingeschränkt.

Die vorliegende Erfindung hat deshalb die Aufgabe, eine Übertragungsanordnung, insbesondere zur Energie- und/oder Signalübertragung, insbesondere zur Verwendung in einem Bearbeitungszentrum bzw. einem Dreh- und/oder Fräszentrum, bereitzustellen, die eine möglichst große Bewegungsfreiheit für die Bearbeitung des Werkstücks ermöglicht. Die Übertragungsanordnung soll insbesondere für die Übertragung von Energie- und/oder Signalen zwischen rotierenden Komponenten eines Bearbeitungszentrums geeignet sein. Insbesondere soll die Übertragungsanordnung durch die Überwachung und/oder Ansteuerung einer Spanneinheit während eines Bearbeitungsvorgangs die Arbeitssicherheit und Bearbeitungsgenauigkeit erhöhen. Außerdem soll die Übertragungsanordnung eine möglichst große Flexibilität, gute Zugänglichkeit und einfache Bedienbarkeit beim Spannen eines Werkstücks oder Werkzeugs gewährleisten. Vorzugsweise soll eine spezifische Anpassung einer Übertragungsanordnung an ein bestimmtes Bearbeitungszentrum, bestimmte Werkstücke oder ein bestimmtes Werkzeug nicht notwendig sein.

Diese Aufgabe wird mit einer Übertragungsanordnung gemäß den Ansprüchen 1 oder 2 gelöst.

Die Aufgabe wird insbesondere durch eine Übertragungsanordnung, insbesondere zur Energie- und/oder Signalübertragung, insbesondere zur Verwendung in einem Bearbeitungszentrum bzw. einem Dreh- und/oder Fräszentrum, gelöst, die Folgendes umfasst:
- eine Spanneinheit, die ein Außengehäuse von vorzugsweise zylindrischer Grundform, ein im Außengehäuse aufgenommenes Innengehäuse sowie einen im Innengehäuse in einer Stellrichtung A verstellbar gehaltenen Innenzylinder, der dazu ausgebildet ist, eine Druck- oder Zugkraft zu Spannzwecken zu übertragen, umfasst,
   wobei sich das Innengehäuse über Federn gegen das Außengehäuse abstützt und in Stellrichtung A gegenüber dem Außengehäuse verschieblich gelagert ist und so einen Federkraftspeicher ausbildet,
   wobei innerhalb der Spanneinheit integriert ein Elektromotor angeordnet ist, um über zwischengeordnete Getriebemittel den Innenzylinder mit einer Kraft in Stellrichtung A zu beaufschlagen,
- eine Konsole mit einem darin drehbar gelagerten Drehtisch,
- mindestens eine erste Übertragungseinrichtung, die mit der Konsole verbunden ist, und
- mindestens eine zweite Übertragungseinrichtung, die mit der Spanneinheit verbunden ist,
   wobei die Spanneinheit lösbar auf dem Drehtisch befestigt ist und erste und zweite Übertragungseinrichtung dazu ausgebildet sind, elektrische Energie zum Antrieb des Elektromotors berührungslos, vorzugsweise induktiv, zwischen einer ersten Übertragungseinrichtung und einer zweiten Übertragungseinrichtung zu übertragen.

Durch die Spanneinheit kann der Innenzylinder entlang der Stellrichtung A, die insbesondere mit der axialen Längsrichtung der vorzugsweise zylindrisch gestalteten Spanneinheit zusammenfällt, verschoben werden. Dadurch wird eine Spannkraft, beispielsweise durch ein auf die Spanneinheit aufgebautes Spannfutter, zur Festlegung eines Werkstücks oder Werkzeugs aufgebracht. Ein Federkraftspeicher ist insofern realisiert, dass sich ein verschiebliches Innengehäuse über Federn gegen das Außengehäuse der Spanneinheit abstützt und dabei in Stellrichtung A gegenüber dem Außengehäuse verschieblich gelagert ist. Weiterhin ist der Elektromotor innerhalb der Spanneinheit integriert, vorzugsweise vom Außengehäuse umschlossen, weiter vorzugsweise innerhalb des Innengehäuses aufgenommen, angeordnet. Der Elektromotor treibt die Getriebemittel an, um den Innenzylinder mit einer Kraft in Stellrichtung A zu beaufschlagen. Die Getriebemittel sind insbesondere innerhalb der Spanneinheit integriert, vorzugsweise vom Außengehäuse umschlossen, weiter vorzugsweise innerhalb des Innengehäuses aufgenommen, angeordnet. Durch diese Kombination wird eine baulich kompakte, universell einsetzbare, zuverlässige und einfach zu bedienende Spanneinheit geschaffen, die beispielsweise in einem Bearbeitungszentrum bzw. einem Dreh- und/oder Fräszentrum, auch für den rotierenden Betrieb, eingesetzt werden kann. Die Spanneinheit könnte sowohl zum Spannen eines Werkzeugs, beispielsweise in einem Spindelkopf, oder zum Spannen eines Werkstücks, beispielsweise auf einem Maschinentisch, eingesetzt werden.

Unter einer Konsole kann allgemein ein Grundaufbau für einen Maschinentisch eines Bearbeitungszentrums, insbesondere eines Dreh- und/oder Fräszentrums, verstanden werden. Ein Maschinentisch kann translatorisch und/oder rotatorisch beweglich sein und einen Drehtisch, oder Rundtisch, umfassen bzw. bilden. Die Konsole muss nicht räumlich feststehend gestaltet sein, sondern kann auch, beispielsweise auf einem Querschieber, in eine oder mehrere Richtungen axial verschieblich oder verkippbar, insbesondere gegenüber der Horizontalen, gelagert sein.

Ein Drehtisch ist in der Konsole drehbar gelagert und ermöglicht die Drehung der Spanneinheit, wenn diese auf dem Drehtisch befestigt ist. Die Spanneinheit kann beispielsweise mit einem Befestigungsflansch über Schrauben und entsprechende T-Nuten oder Trapeznuten in der Oberfläche des Drehtischs kraftschlüssig lösbar auf dem Drehtisch befestigt sein. Vorzugsweise fällt im befestigten Zustand der Spanneinheit die Mittelachse der insbesondere rotationssymmetrischen Spanneinheit mit der Drehachse des Drehtischs zusammen. Durch eine Rotation des Drehtischs, und möglicherweise eine zusätzliche Verfahrung bzw. Verkippung des Drehtischs, beispielsweise durch die Konsole, kann die Spanneinheit, insbesondere zusammen mit einem aufgesetzten und verbundenen Spannfutter, bewegt werden.

Durch die Rotation des Drehtischs entsteht zumindest zeitweise eine Relativbewegung, insbesondere eine Relativdrehung, zwischen der Spanneinheit und der Konsole. Der Drehtisch könnte einerseits relativ langsam rotieren, beispielsweise um ein aufgespanntes Werkstück geeignet zur spanenden Bearbeitung durch ein rotierendes Werkzeug zu positionieren, oder relativ schnell rotieren, beispielsweise um ein aufgespanntes Werkstück relativ zu einem stillstehenden Werkzeug zu bewegen. Die Spanneinheit kann somit gemeinsam mit dem Drehtisch eine Vielzahl von Rotationen hintereinander durchführen, oder sich nur abschnitts- bzw. stückweise relativ zur Konsole, insbesondere in unterschiedliche Richtungen, verdrehen. Prinzipiell ist es denkbar, den Drehtisch über die Spindel einer Werkzeugmaschine, insbesondere eines Dreh- und/oder Fräszentrums, anzutreiben.

Die Übertragungsanordnung umfasst eine erste Übertragungseinrichtung und eine zweite Übertragungseinrichtung, die berührungslos, vorzugsweise induktiv, miteinander zusammenwirken, insbesondere induktiv gekoppelt sind. Die erste Übertragungseinrichtung ist mit der Konsole verbunden, während die zweite Übertragungseinrichtung mit der Spanneinheit verbunden ist. Die Übertragungseinrichtungen können jeweils lösbar an der Konsole bzw. der Spanneinheit befestigt sein und insbesondere auch ganz oder teilweise in diesen aufgenommen sein. Unter einer Verbindung kann sowohl eine elektrotechnische Verbindung im Sinne einer Strom- und/oder Signalleitung, als auch eine mechanische Verbindung im Sinne einer festen bzw. starren Befestigung verstanden werden. Insbesondere steht eine erste Übertragungseinrichtung im Bezugssystem der Konsole fest, während eine zweite Übertragungseinrichtung im Bezugssystem der Spanneinheit bzw. des Drehtischs feststeht, sich also relativ zur ersten Übertragungseinrichtung bewegen, insbesondere verdrehen, kann. Insofern stellt die zweite Übertragungseinrichtung einen Rotor und die erste Übertragungseinrichtung einen Stator dar. Die Übertragungseinrichtungen können jeweils aus mehreren Komponenten bestehen. Mehrere Übertragungseinrichtungen können zu einer einzigen, insbesondere übergeordneten, Übertragungseinrichtung zusammengefasst bzw. in diese integriert sein. Durch erfindungsgemäße erste und zweite Übertragungseinrichtungen ist eine berührungslose Energie- und/oder Signalübertragung, bzw. eine Kopplung zu Übertragungszwecken, sowohl bei stillstehender also auch bei rotierender Spanneinheit möglich.

Vorzugsweise wird elektrische Energie bzw. Leistung zum Antrieb des Elektromotors, insbesondere von einer externen Stromquelle außerhalb der Übertragungsanordnung, über eine erste Übertragungseinrichtung zu einer zweiten Übertragungseinrichtung übertragen. Der Elektromotor ist vorzugsweise ein Gleichstrommotor, kann aber auch als Wechselstrommotor oder insbesondere als Servomotor ausgebildet sein.

Eine berührungslose Übertragung von elektrischer Energie zum Antrieb des innerhalb der Spanneinheit integrierten Elektromotors gewährleistet eine möglichst große Bewegungsfreiheit für die Bearbeitung eines Werkstücks, weil beispielsweise keine Kabelverbindungen oder Steckeranschlüsse an der Spanneinheit vorgesehen werden müssen, die sich beispielsweise unerwünscht aufwickeln oder die Bewegungsfreiheitsgrade der Spanneinheit einschränken könnten. Bei der Einrichtung eines Bearbeitungszentrums, insbesondere beim Spannen eines Werkstücks oder Werkzeugs, wird durch ein Fehlen von behindernden Kabeln und Anschlüssen eine große Flexibilität, gute Zugänglichkeit und einfache Bedienbarkeit erreicht.

Beispielsweise umfassen die Getriebemittel einen Hülsengewindetrieb oder einen Planetenrollengewindetrieb, um eine Drehbewegung des Elektromotors in eine axiale Beaufschlagung des Innenzylinders zu übertragen. Vorteilhaft umfassen die Getriebemittel ein Schneckengetriebe mit einer motorseits vorgesehenen Schnecke und einem abtriebsseitig vorgesehenen Schneckenrad. Weiter vorteilhaft ist das Schneckenrad drehmomentschlüssig mit einem mit Innengewinde versehenen ersten Teilelements des Hülsengewindetriebs oder des Planetenrollengewindetriebs verbunden und insbesondere einstückig mit diesem ausgebildet. Über ein Schneckengetriebe lässt sich bekanntermaßen eine hohe Übersetzung bewirken. Wenn das Schneckengetriebe gleichzeitig mit dem Hülsengewindetrieb oder dem Planetenrollengewindetrieb verzahnt ist, also das Schneckenrad an einer äußeren Umfangsfläche des ersten Teilelements des Hülsengewindetriebs oder des Planetenrollengewindetriebs ausgebildet ist, lässt sich mit wenigen Bauteilen eine Drehbewegung eines Elektromotors in eine Axialbewegung des Innenzylinders umwandeln. Vorteilhaft umfasst das Schneckenrad eine umlaufende obere Lagerfläche sowie eine umlaufende untere Lagerfläche, über die es sich, vorzugsweise über Kugeln, gegenüber dem Innengehäuse in radialer und/oder axialer Richtung abstützt.

Damit die Spanneinheit relativ flachbauend ausgebildet werden kann, wird es bevorzugt, wenn der Elektromotor eine Abtriebswelle aufweist, die orthogonal zur Stellrichtung A des Innenzylinders ausgerichtet ist. Aus ähnlichen Überlegungen wird es, wenn ein Schneckengetriebe vorgesehen wird, bevorzugt, auch die Schnecke in einer zur Stellrichtung A orthogonal verlaufenden Achse S auszurichten. Schließlich kann es im Hinblick auf eine kompakte Ausgestaltung der Spanneinheit vorteilhaft sein, wenn ein Schneckengetriebe vorgesehen wird, die Schnecke nicht unmittelbar axial mit der Abtriebswelle des Elektromotors zu verbinden, sondern die Schnecke orthogonal zur Abtriebswelle des Elektromotors anzuordnen. Eine drehmomentschlüssige Übertragung der Drehbewegung der Abtriebswelle auf die Schnecke kann beispielsweise über ein dazwischen angeordnetes Zahnradgetriebe erfolgen.

Vorteilhaft weist der Innenzylinder zumindest einen Abschnitt, vorzugsweise einen distalen Abschnitt mit einer von der Rotationsform abweichenden Querschnittsform, insbesondere mit elliptischer Querschnittsform auf, um den Innenzylinder relativ zum Außengehäuse drehfest festzulegen. Konkret kann der Innenzylinder mit elliptischer Querschnittsform beispielsweise durch eine Öffnung im Außengehäuse mit entsprechend elliptischer Querschnittsform geführt sein, so dass hierdurch die gewünschte drehfeste Festlegung bewirkt wird.

Außerdem wird die Aufgabe insbesondere durch eine Übertragungsanordnung, insbesondere zur Energie- und/oder Signalübertragung, insbesondere mit den Merkmalen des Anspruchs 1, gelöst, die Folgendes umfasst:
- eine Spanneinheit, die ein Außengehäuse von vorzugsweise zylindrischer Grundform, ein im Außengehäuse aufgenommenes Innengehäuse sowie einen im Innengehäuse in einer Stellrichtung A verstellbar gehaltenen Innenzylinder, der dazu ausgebildet ist, eine Druck- oder Zugkraft zu Spannzwecken zu übertragen, umfasst,
   wobei sich das Innengehäuse über Federn gegen das Außengehäuse abstützt und in Stellrichtung A gegenüber dem Außengehäuse verschieblich gelagert ist und so einen Federkraftspeicher ausbildet,
   wobei innerhalb der Spanneinheit integriert ein Elektromotor angeordnet ist, um über zwischengeordnete Getriebemittel den Innenzylinder mit einer Kraft in Stellrichtung A zu beaufschlagen,
- eine Konsole mit einem darin drehbar gelagerten Drehtisch,
- mindestens eine erste Übertragungseinrichtung, die mit der Konsole verbunden ist, und
- mindestens eine zweite Übertragungseinrichtung, die mit der Spanneinheit verbunden ist,
   wobei die Spanneinheit lösbar auf dem Drehtisch befestigt ist und Sensoreinrichtungen umfasst, und wobei erste und zweite Übertragungseinrichtungen dazu ausgebildet sind, von den Sensoreinrichtungen erzeugte Signale berührungslos, vorzugsweise induktiv, zwischen einer ersten Übertragungseinrichtung und einer zweiten Übertragungseinrichtung zu übertragen.

Die zuvor beschriebenen vorteilhaften und möglichen Ausgestaltungen der Spanneinheit, der Konsole, des Drehtischs und der Übertragungseinrichtungen gelten entsprechend für die Übertragungsanordnung gemäß diesem Aspekt der Erfindung, die nachfolgend beschrieben ist.

Die Spanneinheit umfasst Sensoreinrichtungen, die innerhalb der Spanneinheit integriert, vorzugsweise vom Außengehäuse umschlossen, weiter vorzugsweise innerhalb des Innengehäuses aufgenommen, angeordnet sein können. Eine Sensoreinrichtung umfasst insbesondere einen Sensor, der beispielsweise eine Kraft, einen Verschiebungsweg oder eine Drehzahl misst oder einen bestimmten Zustand erfasst und ein entsprechendes Sensorsignal erzeugt. Ein solcher Sensor kann auf verschiedensten physikalischen Prinzipien beruhen. Insbesondere sind die Sensoreinrichtungen signalleitend mit der zweiten Übertragungseinrichtung verbunden. Eine erste und/oder zweite Übertragungseinrichtung kann Komponenten zur Aufbereitung, Verarbeitung oder Auswertung der Signale, insbesondere Mess- und/oder Zustandssignale der Sensoren, umfassen.

Signale, insbesondere elektrische Signale, werden berührungslos, beispielsweise kapazitiv oder vorzugsweise induktiv, zwischen der ersten und der zweiten Übertragungseinrichtung übertragen. Vorzugsweise werden Signale von einer zweiten Übertragungseinrichtung zu einer ersten Übertragungseinrichtung übertragen. Beispielsweise kann ein Verriegelungszustand einer Spanneinheit, bzw. eines Spannfutters, die an einem Werkstück tatsächlich montan anliegende Spannkraft, oder ein Verstellweg der Spanneinheit in Stellrichtung A von einer Sensoreinrichtung erfasst, entsprechende Signale erzeugt und zu einer zweiten Übertragungseinheit geleitet, berührungslos an eine erste Übertragungseinrichtung übertragen und an eine Maschinensteuerungseinheit des Bearbeitungszentrums weitergeleitet werden. Es kann aber auch eine Signalübertragung anders herum, beispielsweise zur Ansteuerung der Sensoreinrichtungen, oder in beide Richtungen, insbesondere gleichzeitig, realisiert sein. Einer Sensoreinrichtung können jeweils eine bestimmte erste und eine zweite Übertragungseinrichtung zugeordnet sein, die ein bestimmtes Signal übertragen. Es können aber auch verschiedene Signale, die von verschiedenen Sensoreinrichtungen erzeugt werden, zwischen einer ersten und einer zweiten Übertragungseinrichtung übertragen werden.

Insbesondere können Von Sensoreinrichtungen erzeugte Signale Lichtsignale sein. Sensorsignale könnten auch in Form von Licht berührungslos zwischen ersten und zweiten Übertragungseinrichtungen übertragen werden. Es können Sensoreinrichtungen vorgesehen sein, die Lichtsignale erzeugen. Erste und/zweite Übertragungseinrichtungen können Wandlungskomponenten umfassen, die elektrische Messsignale in Lichtsignale umwandeln, oder umgekehrt. Eine Übertragungseinrichtung, insbesondere die zweite Übertragungseinrichtung könnte beispielsweise eine Lichtquelle, insbesondere einen Laser oder eine LED, und/oder einen Lichtleiter bzw. Lichtwellenleiter aufweisen, um das ausgekoppelte Lichtsignal berührungslos über einen Übertragungsspalt zu einer Übertragungseinrichtung, insbesondere ersten Übertragungseinrichtung, zu senden. Eine erste Übertragungseinrichtung könnte das Lichtsignal, beispielsweise mittels einer Photozelle, empfangen und ein entsprechendes, insbesondere elektrisches, Signal an eine Auswertungs-, oder Verarbeitungs- oder Maschinensteuerungseinheit weiterleiten. Die erste Übertragungseinrichtung könnte empfangene Lichtsignale aber auch in einen Lichtleiter einkoppeln und das Signal als Lichtsignal weiterleiten. Es können mehrere parallele Lichtleiter, und entsprechend mehrere Empfangseinrichtungen, wie Photozellen, vorgesehen sein, insbesondere um unterschiedliche Sensorsignale zeitgleich zu übertragen. Es ist aber auch denkbar unterschiedliche Sensorsignale zeitlich nacheinander, insbesondere periodisch, mit einem einzigen Lichtleiter zu übertragen. Vorteilhaft kann ein Lichtleiter entlang der Drehachse verlaufen bzw. auf ihr angeordnet sein.

Eine berührungslose Übertragung von Signalen gewährleistet eine möglichst große Bewegungsfreiheit für die Bearbeitung eines Werkstücks, weil beispielsweise keine Kabelverbindungen oder Steckeranschlüsse an der Spanneinheit vorgesehen werden müssen, die sich beispielsweise unerwünscht aufwickeln oder die Bewegungsfreiheitsgrade der Spanneinheit einschränken könnten. Weiterhin kann durch die Berührungslose Signalübertragung eine Überwachung und/oder Ansteuerung einer stillstehenden oder bewegten, insbesondere rotierenden, Spanneinheit während eines Bearbeitungsvorgangs eines Werkstücks erfolgen und dadurch sowohl die Bearbeitungsgenauigkeit als auch die Arbeitssicherheit erhöht werden.

Gemäß einem weiteren Aspekt der Erfindung können erste und zweite Übertragungseinrichtungen dazu ausgebildet sein sowohl elektrische Energie zum Antrieb des Elektromotors als auch von Sensoreinrichtungen erzeugte Signale berührungslos zu übertragen. Vorzugsweise wird auch elektrische Energie zur Versorgung der Sensoreinrichtungen berührungslos zwischen den Übertragungseinrichtungen übertragen.

Die Übertragungssicherheit der Übertragungsanordnung kann weiter erhöht werden, indem die Übertragungseinrichtungen außerhalb des Arbeitsbereiches eines Bearbeitungszentrums angeordnet werden, beispielsweise geschützt in einem inneren Bereich um die Drehachse, vorzugsweise zwischen bzw. in dem Drehtisch und der Konsole. Insbesondere können während einer Bearbeitung anfallende Späne oder abfließende Kühlflüssigkeit derart geschützt angeordnete Übertragungseinrichtungen in ihrer Funktion nicht negativ beinträchtigen. Auch die Arbeitssicherheit und -effizienz kann durch berührungslos arbeitende und geschützte Übertragungseinrichtungen erhöht werden, weil Steckerverbindungen nicht verbunden, beispielsweise manuell eingesteckt, werden müssen, nicht verschmutzt oder beschädigt werden können, und folglich auch nicht intensiv gewartet bzw. gereinigt werden müssen. Dies hat insbesondere für automatisierte Spannvorgänge große Vorteile für die Arbeitseffizenz.

In einer vorteilhaften Weiterbildung der Erfindung ist innerhalb der Spanneinheit integriert ein Akku, insbesondere ein Lithium-Ionen-Akku, angeordnet. Insbesondere ist elektrische Energie zum Auf- und/oder Entladen des Akkus berührungslos, vorzugsweise induktiv, zwischen einer ersten Übertragungseinrichtung und einer zweiten Übertragungseinrichtung übertragbar. Der Akku ist vorzugsweise vom Außengehäuse umschlossen, weiter vorzugsweise innerhalb des Innengehäuses aufgenommen, angeordnet. Es können auch mehrere Akkus innerhalb der Spanneinheit integriert sein. Der Akku kann den Elektromotor mit elektrischer Energie versorgen. Bei einer hohen Leistungsaufnahme der Spanneinheit, beispielsweise während eines Spannvorgangs, kann gleichzeitig sowohl elektrische Energie aus dem Akku, als auch an eine zweite Übertragungseinrichtung berührungslos übertragene elektrische Energie zum Antrieb des Elektromotors bereitgestellt werden. Die Anteile der elektrischen Leistung, die von dem Akku und über die induktive Übertragung in der Spanneinheit, insbesondere zum Antrieb des Elektromotors, bereitgestellt werden, können abhängig von der Kapazität und dem Ladezustand des Akkus sowie von der konkreten Ausgestaltung der ersten und der zweiten Übertragungseinrichtung variieren. Beispielsweise könnten von einer Spannleistung von 1,5 kW zwischen 500 und 700 W induktiv in die Spanneinheit übertragen, und der Differenzbetrag aus dem Akku eingespeist werden. Wenn der Elektromotor gerade nicht im Betrieb ist, kann der Akku, auch bei einer rotierenden Spanneinheit, berührungslos aufgeladen oder entladen werden. Ein Akku hat den Vorteil, dass auch Energie- bzw. leistungsintensive Spannvorgänge von der Spanneinheit für einen Produktionsvorgang, insbesondere einen Werkstück- oder Werkzeugwechsel, in wirtschaftlich akzeptabler Zeit vorgenommen werden können und gleichzeitig durch ein berührungsloses Laden des Akkus durch die Übertragungseinrichtungen die Bewegungsfreiheitsgrade der Spanneinheit erhalten bleiben.

In einer vorteilhaften Weiterbildung der Erfindung weisen erste und zweite Übertragungseinrichtungen Primär- bzw. Sekundärspulen auf, die insbesondere jeweils paarweise zusammenwirken, um elektrische Energie von einer ersten Übertragungseinrichtung zu einer zweiten Übertragungseinrichtung und/oder Sensorsignale, insbesondere Verriegelungs-, Entriegelungs-, Kraft-, Weg-und/oder Drehzahlsignale, von einer zweiten Übertragungseinrichtung zu einer ersten Übertragungseinrichtung, insbesondere induktiv, zu übertragen. Zur Übertragung von elektrischer Energie, insbesondere zum Antrieb des Elektromotors, wird eine Primärspule, die in einer ersten Übertragungseinrichtung angeordnet ist, von einem Strom durchflossen, der durch eine externe Stromquelle bereitgestellt wird. In einer Sekundärspule, die in einer zweiten Übertragungseinrichtung angeordnet ist, wird ein Strom induziert, der zum Antrieb des Elektromotors genutzt wird. Zur Übertragung eines elektrischen Sensorsignals weist beispielsweise eine zweite Übertragungseinrichtung eine Primärspule auf, wobei an einer zweiten Übertragungseinrichtung, die eine Sekundärspule aufweist, ein entsprechendes Signal induziert wird. Es ist denkbar in einer ersten oder zweiten Übertragungseinheit mehrere Primär- und/oder Sekundärspulen, die jeweils unterschiedliche Signale oder elektrische Energie übertragen können, anzuordnen. Vorzugsweise sind Primär- und/oder Sekundärspulen, sowie weitere Komponenten der ersten und zweiten Übertragungseinrichtungen, so ausgeführt, dass sie von störenden Einflüssen geschützt bzw. abgeschirmt sind. Insbesondere sollen bei der Bearbeitung eines Werkstücks anfallende Späne, abfließende Kühlflüssigkeit oder auftretende Vibrationen die Übertragungsfunktion der Übertragungseinrichtungen nicht beeinträchtigen können. Dies kann einerseits durch eine geschützte Anordnung beider Übertragungseinrichtungen in einem inneren Bereich des Drehtischs und der Konsole erreicht werden. Andererseits können die Übertragungseinrichtungen selbst so ausgeführt sein, dass Spulen beispielsweise nicht offenliegend, sondern verkleidet, abgedichtet oder isoliert in ersten und zweiten Übertragungseinrichtungen angebracht bzw. eingebaut sind.

In einer vorteilhaften Weiterbildung der Erfindung ist eine zweite Übertragungseinrichtung exzentrisch zu einer Mittelachse der Spanneinheit, insbesondere seitlich am Außengehäuse, an bzw. in der Spanneinheit angeordnet. Die Mittelachse fällt insbesondere mit der Längsachse einer Spanneinheit mit einer zylindrischen Grundform zusammen, die wiederum mit der Drehachse des Drehtischs und der Stellrichtung A des Innenzylinders zusammenfällt, wenn die Spanneinheit entsprechend auf dem Drehtisch befestigt ist. In diesem Fall beschreibt eine exzentrisch angeordnete zweite Übertragungseinrichtung eine Kreisbahn um die Drehachse, wenn die Spanneinheit rotiert. Eine insbesondere feststehende erste Übertragungseinrichtung kann so bezüglich dieser Kreisbahn angeordnet sein, dass sich während eines Zeitintervalls einer Umdrehung die erste und die zweite Übertragungseinrichtung zumindest abschnittsweise so gegenüberliegen, dass zwischen ihnen ein Übertragungsspalt entsteht über den eine induktive Kopplung möglich ist. Die erste und/oder die zweite Übertragungseinrichtung kann beispielsweise die Form eines Kreisringsegments aufweisen. Es können mehrere zweite Übertragungseinrichtungen, insbesondere zur Übertragung verschiedener Signale oder von elektrischer Energie, über den Umfang der Spanneinheit verteilt angeordnet sein.

In einer vorteilhaften Weiterbildung der Erfindung ist eine zweite Übertragungseinrichtung koaxial zu einer Mittelachse der Spanneinheit, insbesondere unterhalb, vorzugsweise an einem unteren Außengehäuseelement, an der Spanneinheit angeordnet. Insbesondere kann eine erste Übertragungseinrichtung koaxial zu der zweiten Übertragungseinrichtung angeordnet sein. Eine berührungslose Übertragung von elektrischer Energie und/oder Signalen kann dann über Stirnflächen und/oder Umfangsflächen umgesetzt sein. In diesem Fall kann die induktive Kopplung unabhängig von der Stellung des Drehtischs, insbesondere über die gesamte Umfangsfläche der zweiten Übertragungseinrichtung, erfolgen.

Alternativ kann eine erste Übertragungseinrichtung exzentrisch zu einer Mittelachse der Spanneinheit angeordnet sein, wobei die Kopplung mit der zweiten Übertragungseinrichtung dann nur über einen Teil des Umfangs der zweiten Übertragungseinrichtung möglich ist.

Durch eine koaxiale Anbringung der zweiten Übertragungseinrichtung führt diese bei Drehung des Drehtischs eine reine Rotation aus und ist jederzeit, zumindest über einen Teil ihres Umfangs, gegenüber der ersten Übertragungseinrichtung angeordnet, sodass eine kontinuierliche Kopplung realisierbar ist. Dies ist insbesondere vorteilhaft wenn der Drehtisch bzw. die Spanneinheit nicht, oder nur langsam, rotiert. Dadurch kann eine hohe Übertragungsrate bzw. -zuverlässigkeit der Übertragungsanordnung erreicht werden.

In einer vorteilhaften Weiterbildung der Erfindung weisen eine erste Übertragungseinrichtung und eine zweite Übertragungseinrichtung, vorzugsweise kreisrunde oder ringförmige, Stirnflächen auf, zwischen denen ein, insbesondere axialer, Übertragungsspalt ausgebildet ist. Beispielsweise sind erste und zweite Übertragungseinrichtungen koaxial zueinander ausgerichtet und bilden insbesondere zueinander parallele Stirnflächen aus, die senkrecht zur Drehachse des Drehtischs bzw. der Längsachse der Spanneinheit ausgerichtet sind. Ein axialer Übertragungsspalt erstreckt sich bei horizontaler Ausrichtung des Drehtischs in horizontaler Richtung zwischen den Stirnflächen. Die Stirnflächen können auch nur Sektoren von Kreisen oder Ringen darstellen. Eine Stirnfläche kann auch gestuft oder abgeschrägt ausgeführt sein. Dabei kann eine Stirnfläche in unterschiedliche Sektoren oder Abschnitte unterteilt sein, die jeweils unterschiedlichen Übertragungseinrichtungen zugeordnet sind, sodass über eine Stirnfläche verschiedene Signale und/oder elektrische Energie übertragen werden kann.

In einer vorteilhaften Weiterbildung der Erfindung weisen die erste Übertragungseinrichtung und die zweite Übertragungseinrichtung Umfangsflächen auf, zwischen denen ein, insbesondere radialer, Übertragungsspalt ausgebildet ist. Beispielsweise sind erste und zweite Übertragungseinrichtungen zumindest teilweise ineinander angeordnet, wobei sowohl die erste als auch die zweite Übertragungseinrichtung innen oder außen angeordnet sein kann. Ein radialer Übertragungsspalt erstreckt sich dann zwischen einer inneren und einer äußeren Umfangsfläche der ersten bzw. zweiten Übertragungseinrichtung, insbesondere in vertikale Richtung bei horizontaler Ausrichtung des Drehtischs. Der radiale Übertragungsspalt kann sich abschnittsweise, oder über den gesamten Umfang, ausbilden. Bei einer induktiven Kopplung über Umfangsflächen kann die Übertragungsfläche durch eine Anpassung des axialen Überlappungsbereichs der ersten und zweiten Übertragungseinrichtungen eingestellt werden.

In einer vorteilhaften Weiterbildung der Erfindung sind eine einzige erste Übertragungseinrichtung und eine einzige zweite Übertragungseinrichtung vorgesehen sind, um elektrische Energie zum Antrieb des Elektromotors, elektrische Energie zum Auf- und/oder Entladen des Akkus und/oder mindestens ein Sensorsignal zu übertragen. Eine einzige Übertragungseinrichtung kann beispielsweise durch eine bauliche Zusammenfassung einzelner Übertragungseinrichtungen, die einzelnen Signalen oder der Übertragung von elektrischer Energie zugeordnet sind, gegeben sein. Durch eine Integration verschiedener Übertragungseinrichtungen ist die Übertragungsanordnung einfach und kompakt mit definierten Kopplungsschnittstellen zur Übertragung bestimmter Signale oder elektrischer Energie aufgebaut.

In einer vorteilhaften Weiterbildung der Erfindung haben die erste und/oder die zweite Übertragungseinrichtung eine rotationssymmetrische, vorzugsweise kreiszylindrische, Grundform. Insbesondere bei einer koaxialen Anordnung der ersten und zweiten Übertragungseinrichtung zueinander bilden erste und zweite Übertragungseinrichtungen mit kreiszylindrischer Grundform kreisrunde oder ringförmige Stirnflächen oder Mantelflächen und ermöglichen die Übertragung bei konstanter Breite eines Übertragungsspalts. Auf diese Weise ist eine zuverlässige und kontinuierliche Kopplung zwischen der ersten und der zweiten Übertragungseinrichtung gewährleistet.

In einer vorteilhaften Weiterbildung der Erfindung weist die erste Übertragungseinrichtung einen sich axial erstreckenden Übertragungsschaft auf, in dem mehrere Leitungen zur Leitung von elektrischer Energie und/oder Sensorsignalen, beispielsweise Kabel oder ein Bussystem, angeordnet sind. Vorzugsweise weist der Übertragungsschaft einen geringerem Querschnitt als eine Stirnfläche der ersten Übertragungseinrichtung auf. Der Übertragungsschaft ist insbesondere in der Konsole fest gelagert, insbesondere eingesteckt, wobei der Übertragungsschaft vorzugsweise an einem unteren Ende Anschlüsse zur Verbindung der Leitungen mit einer externen Stromversorgung und/oder einen Maschinensteuerung aufweist.

In einer vorteilhaften Weiterbildung der Erfindung wird der Drehtisch über eine Hohlwelle angetrieben wird, in die die erste Übertragungseinrichtung, insbesondere der Übertragungsschaft, hineinragt. Durch eine Anordnung des Übertragungsschafts zumindest teilweise innerhalb der Hohlwelle ist konstruktiv eine koaxiale Ausrichtung der ersten Übertragungseinrichtung mit der Drehachse des Drehtischs erreichbar. Auf diese Weise ist eine Kopplung der ersten und zweiten Übertragungseinrichtung über Stirn- und/oder Umfangsflächen bei kompakter Bauweise möglich.

In einer vorteilhaften Weiterbildung der Erfindung weist der Drehtisch eine zentrale, vorzugsweise kreiszylinderförmige, Aussparung auf, in die die erste Übertragungseinrichtung und/oder die zweite Übertragungseinrichtung hineinragen bzw. hineinragt. Die zweite Übertragungseinrichtung ist beispielsweise an einem unteren Außengehäuseelement der Spanneinheit angeordnet und taucht im befestigten Zustand der Spanneinheit auf dem Drehtisch in die Aussparung ein. Insbesondere ist die Aussparung so gestaltet, dass ein Durchgang von der Oberseite des Drehtischs zu der ersten Übertragungseinrichtung gegeben ist.

In einer vorteilhaften Weiterbildung der Erfindung beträgt die Breite des Übertragungsspalts zwischen 0,1 mm und 10 mm, vorzugsweise zwischen 0,5 mm und 5mm und besonders bevorzugt in etwa 1 mm. Der derart ausgebildeter Übertragungsspalt, insbesondere Luftspalt, gewährleistet eine gute induktive Kopplung zwischen den Stirn- bzw. Umfangsflächen der ersten und zweiten Übertragungseinrichtungen. Dadurch können eine ausreichend große Leistung zum Antrieb des Elektromotors und Signale zuverlässig und störungslos berührungslos übertragen werden.

In einer vorteilhaften Weiterbildung der Erfindung sind die Sensoreinrichtungen und die zweite Übertragungseinrichtung signalleitend miteinander verbunden, insbesondere über Kabel, die durch Öffnungen in dem Außen- und/oder Innengehäuse hindurch geführt sind. Es ist denkbar, die zweite Übertragungseinrichtung in dem Außengehäuse der Spanneinheit aufzunehmen bzw. sie darin zu integrieren, sodass keine Leitungen aus dem Außengehäuse herausführen. Sensoreinrichtungen können im Außengehäuse gelagert sein, insbesondere um eine Relativverschiebung, bzw. die Verstellposition, des Innengehäuses zum Außengehäuse zu erfassen. Sensoreinrichtungen können auch im Innengehäuse aufgenommen sein, beispielsweise um Drehbewegungen der Getriebemittel oder des Elektromotors zu erfassen. Sensoreinrichtungen können auch zwischen dem Außen- und dem Innengehäuse angeordnet sein, insbesondere im Bereich des Federkraftspeichers, beispielsweise um eine wirkende Federkraft zu messen. Entsprechende Durchgangsöffnungen im Innengehäuse können eine signalleitende Verbindung der Sensoreinrichtungen mit der zweiten Übertragungseinrichtung ermöglichen.

In einer vorteilhaften Weiterbildung der Erfindung stützt sich das Innengehäuse über eine Mehrzahl von Federn unterschiedlicher Bauart, insbesondere über ein oder mehrere Spiralfedern und über ein oder mehrere Gasdruckfedern, am Außengehäuse ab. In dieser Bauart werden die Federcharakteristika der genannten Federn unterschiedlicher Bauart in synergistischer Weise miteinander kombiniert. Während eine Spiralfeder bei geringer Verstellbewegung nur eine geringe Gegenkraft, hingegen bei hohen Verstellwegen eine hohe Gegenkraft bereitstellt, wird von einer Gasdruckfeder bereits bei nur geringen Verstellwegen eine relativ hohe Gegenkraft erzeugt. Überlagert man nun die Federcharakteristika beider Federn unterschiedlicher Bauart, indem man sie von ihrer Wirkungsweise her, also funktionell betrachtet parallel zueinander, etwa nebeneinanderliegend, einsetzt, so ergibt sich eine Gesamtfedercharakteristik, die auch schon bei geringen Verstellwegen eine relativ hohe Gegenkraft bereitstellt, diese Gegenkraft aber bei höheren Verstellwegen sogar noch - aufgrund der dann einsetzenden Wirkung der Spiralfedern - ansteigt. Die Kombination von Spiral- und Gasdruckfedern bietet den Vorteil, dass, wenn die Spanneinheit "Nachspannen" muss, bei geringen eingestellten Kräften die Spannkraft über den Nachspannweg nicht, oder nur sehr geringfügig, abnimmt. Unter einem "Nachspannen" ist in diesem Zusammenhang insbesondere ein Aufbringen einer Spannkraft aus einem Federkraftspeicher zu verstehen, wenn, beispielsweise aufgrund von Vibrationen oder einer geringfügigen Deformation eines eingespannten Werkstücks während der Bearbeitung, eine geringfügige Verschiebung des Innenzylinders auftritt, die als "Nachspannweg" bezeichnet wird. Insbesondere bei kleinen eingestellten Spannkräften, beispielsweise wegen eines deformationsempfindlichen Werkstücks, kann durch die erfindungsgemäße Kombination von Spiral- und Gasdruckfedern, insbesondere durch die Charakteristik einer Gasdruckfeder, eine Lockerung der Einspannung oder sogar ein Loslösen des Werkstücks verhindert werden.

In einer vorteilhaften Weiterbildung der Erfindung ist eine Arretiereinrichtung vorgesehen, um die Getriebemittel bedarfsweise, insbesondere in Ruhestellung des Elektromotors, zu arretieren. Zwar kann bei entsprechender Ausgestaltung des Schneckengetriebes bereits eine Arretierung durch das Schneckengetriebe selbst gegeben sein, aus Sicherheitsgründen oder bei einer keine Arretierung bewirkenden Ausgestaltung des Schneckengetriebes, bewirkt die Arretierung insbesondere in Ruhestellung des Elektromotors aber mit besonders hoher Zuverlässigkeit, dass eine erzeugte und im Federkraftspeicher aufgenommene Spannkraft nicht durch unerwünschte Rückstellung der Getriebemittel verloren geht.

In einer konkreten Ausgestaltung kann die Arretiereinrichtung einen axial verlagerbaren Stift umfassen, der über eine Betätigungseinrichtung mit einer Arretierausnehmung im zugeordneten Getriebemittel, insbesondere in einem Wellenfortsatz der Schnecke in Eingriff bzw. außer Eingriff bringbar ist. Ein derartiger axial verlagerbarer Stift bewirkt eine sichere Arretierung, da er lediglich in Arretierposition gehalten, nicht aber dauerhaft mit einer Haltekraft beaufschlagt werden muss. Die Betätigungseinrichtung zur Verlagerung des axial verlagerbaren Stifts kann als elektromagnetischer Aktuator ausgebildet sein, der den Stift von einer ersten Position in eine zweite Position bzw. von einer zweiten Position in eine erste Position verlagern kann und mittels der ersten und zweiten Übertragungseinrichtungen über ein Signal berührungslos angesteuert werden kann. Ggf. kann der axial verlagerbare Stift auch durch eine Feder in Richtung auf die Arretierposition beaufschlagt sein derart, dass lediglich bei Betätigung des Elektromotors bzw. der Getriebemittel die Betätigungseinrichtung angesteuert wird, um den axial verlagerbaren Stift entgegen der Federbeaufschlagung aus der Arretierposition in eine Freigabeposition zu überführen. Sobald die Verstellbewegung des Spannzylinders über den Elektromotor und die Getriebemittel abgeschlossen ist, kann die Betätigungseinrichtung den Stift wieder unter Wirkung der genannten Feder in die Arretierposition zurückgleiten lassen.

In einer vorteilhaften Weiterbildung der Erfindung umfassen die Sensoreinrichtungen Arretiersensormittel. Die Arretiersensormittel sind ausgebildet und bestimmt zu überprüfen, ob eine Arretiereinrichtung in Arretierstellung ist, und ein entsprechendes Verriegelungs- oder Entriegelungssignal an die zweite Übertragungseinrichtung zu senden. Konkret kann, wenn die Arretiereinrichtung einen axial verlagerbaren Stift umfasst, durch die Arretiersensormittel überprüft werden, in welcher Position sich der axial verlagerbare Stift befindet. Daraus kann ein Verriegelungszustand, also insbesondere der Zustand verriegelter Getriebemittel, oder ein Entriegelungszustand, also insbesondere der Zustand entriegelter Getriebemittel, der Spanneinheit erfasst werden ein entsprechendes Verriegelungs- oder Entriegelungssignal von den Arretiersensormitteln erzeugt werden.

Weiterhin können die Sensoreinrichtungen solche Sensoreinrichtungen umfassen, die ausgebildet und bestimmt sind, die Verstellposition des Innengehäuses innerhalb des Außengehäuses und/oder die im Federkraftspeicher vorgehaltene Gegenkraft zu erfassen, und ein entsprechendes Weg- und/oder Kraftsignal an die zweite Übertragungseinrichtung zu senden. Die im Federkraftspeicher vorgehaltene Gegenkraft kann auch indirekt über die Verstellposition des Innengehäuses, insbesondere über eine bekannte Kraft-Feder-Kennlinie des Federkraftspeichers, erfasst werden. Ein Wegsignal kann beispielsweise vom gespannten Werkstück oder dem aufgesetzten Spannfutter abhängig sein, während ein Kraftsignal einen direkten Rückschluss auf die tatsächlich anliegende Spannkraft zulässt.

Weiterhin können die Sensoreinrichtungen solche Sensoreinrichtungen umfassen, die ausgebildet und bestimmt sind, die Drehbewegung des Elektromotors, einer Abtriebswelle und/oder der Getriebemittel, insbesondere die jeweilige Umdrehungszahl, zu erfassen, und ein entsprechendes, insbesondere inkrementelles, Drehzahlsignal an die zweite Übertragungseinrichtung zu senden.

Beispielsweise empfängt die zweite Übertragungseinrichtung ein Verriegelungssignal, ein Entriegelungssignal, ein Kraftsignal, ein Wegsignal und/oder Drehzahlsignale und überträgt diese berührungslos, insbesondere induktiv, an die erste Übertragungseinrichtung. Es kann eine Auswahl, eine beliebige Kombination der genannten Sensorsignale oder eine Vielzahl weiterer Sensorsignale berührungslos übertragen werden. Bevorzugt werden zwei Zustandssignale, insbesondere SPS-Signale (Speicher-Programmierbare Steuerung), die digitale Signale sind, und zwei Messsignale, die insbesondere analoge Signale sind, von der zweiten Übertragungseinrichtung empfangen, aufbereitet und an die erste Übertragungseinrichtung übertragen. Die Messsignale sind beispielsweise Signale eines linearen Positionssensors, beispielsweise von 0 bis 10 V oder 4 bis 20 mA, während die Zustandssignale insbesondere ein Verriegelungs- und ein Entriegelungssignal, beispielsweise von 0 oder 24 V sind. Die erste Übertragungseinrichtung ist insbesondere dazu ausgebildet, eine Gleichspannung zur Ansteuerung und Versorgung des Elektromotors, beispielsweise zwischen 48 und 150 V, und/oder eine Gleichspannung zur Ansteuerung und Versorgung der Sensoreinrichtungen, beispielsweise von 24 V, an die zweite Übertragungseinrichtung zu übertragen. Die genannten Spannungswerte sind rein beispielhaft und verdeutlichen lediglich die Übertragbarkeit unterschiedlicher Signale. Des Weiteren werden die übertragenen Signale in einer Signalverarbeitungseinheit verarbeitet und ausgewertet, um den Zustand der Spanneinheit, insbesondere der Arretierung und des Federkraftspeichers, zu analysieren bzw. überwachen zu können. Die erste Übertragungseinrichtung stellt eine Schnittstelle zu einer Maschinensteuerung, insbesondere einer SPS dar.

In einer bevorzugten Ausgestaltung das Innengehäuse derart ausgebildet, dass es ein Gehäusegrundelement sowie einen Gehäusedeckel umfasst, die über lösbare Verbindungselemente aneinander befestigt sind. In dieser Ausgestaltung wird es besonders einfach, die Spanneinheit, insbesondere das Innengehäuse mit den darin aufgenommenen bzw. gelagerten Komponenten, wie Schneckengetriebe, Hülsengewindetrieb mit darin aufgenommenem Innenzylinder, Elektromotor mit Zahnradgetriebe, Federn, Sensoreinrichtungen und Akku zu montieren.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Figur 1: eine erste Ausführungsform der erfindungsgemäßen Übertragungsanordnung mit exzentrisch angeordneten Übertragungseinrichtungen in einer schematischen Darstellung;
- Figur 2: eine zweite Ausführungsform der erfindungsgemäßen Übertragungsanordnung mit einer Kopplung über Stirnflächen in einer schematischen Darstellung;
- Figur 3: eine dritte Ausführungsform der erfindungsgemäßen Übertragungsanordnung mit einer Kopplung über Umfangsflächen in einer schematischen Darstellung;
- Figur 4: eine vierte Ausführungsform der erfindungsgemäßen Übertragungsanordnung mit einer zentrisch angeordneten zweiten Übertragungseinrichtung und einer exzentrisch angeordneten ersten Übertragungseinrichtung in einer schematischen Darstellung;
- Figur 5a: eine Detailansicht einer Ausführungsform der ersten und zweiten Übertragungseinrichtung mit einer Kopplung über Stirnflächen in einer schematischen Darstellung;
- Figur 5b: eine Detailansicht einer Ausführungsform der ersten und zweiten Übertragungseinrichtung mit einer Kopplung über Umfangsflächen in einer schematischen Darstellung;
- Figur 5c: eine schematische Darstellung einer Ausführungsform der erfindungsgemäßen Übertragungsanordnung in einem Blockschaltbild;
- Figur 6: eine Ausführungsform der erfindungsgemäßen Spanneinheit in perspektivischer Ansicht;
- Figur 7: eine Ausführungsform der erfindungsgemäßen Spanneinheit nach Figur 6 in einer Schnittansicht;
- Figur 8: eine Ausführungsform der erfindungsgemäßen Spanneinheit nach Figur 6 mit einem Akku in einer Schnittansicht entlang der Linie IV - IV in Figur 6;
- Figur 9: ein Federkennlinien-Diagramm zur Veranschaulichung des erfindungsgemäßen Federkraftspeichers, dessen parallel zueinander wirksame Federn unterschiedlicher Bauart sich hinsichtlich ihrer Federcharakteristik überlagern.

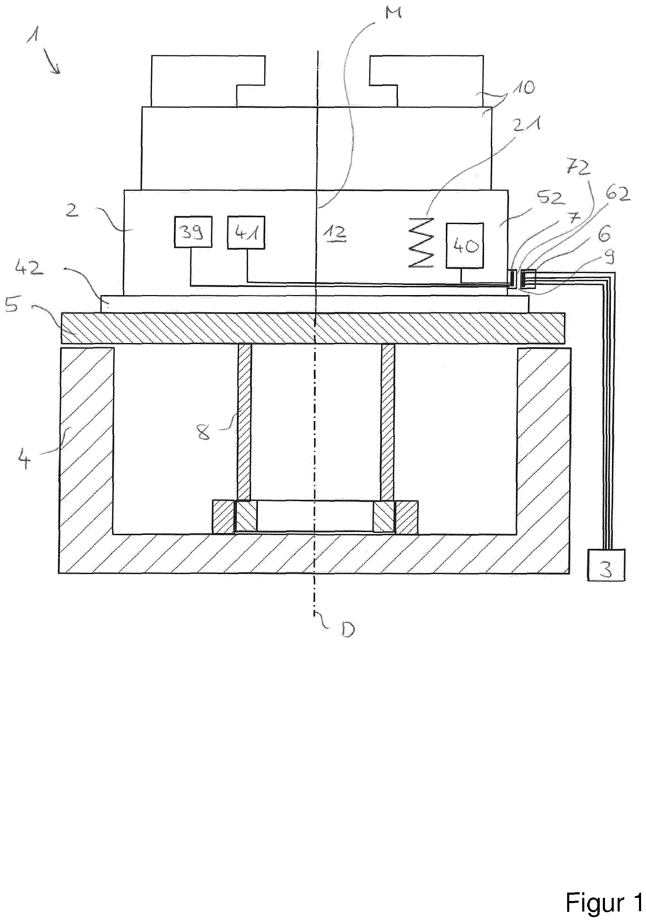

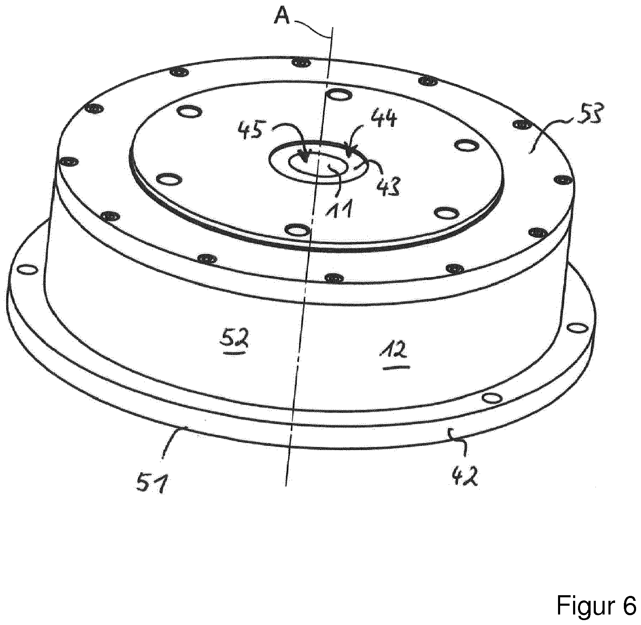

Die Figuren 1-4 zeigen jeweils eine Ausführungsform der erfindungsgemäßen Übertragungsanordnung in schematischer Darstellung, wobei die Gestaltung und Anordnung der ersten und zweiten Übertragungseinrichtungen 6, 7 in den Figuren 1-4 jeweils unterschiedlich ist. Eine erfindungsgemäße Übertragungsanordnung 1 umfasst eine Spanneinheit 2, eine Konsole 4, in der ein Drehtisch 5 drehbar gelagert ist, sowie eine erste Übertragungseinrichtung 6 und eine zweite Übertragungseinrichtung 7. Nähere Einzelheiten zur möglichen Ausführung der Spanneinheit 2 werden im Zusammenhang mit den Figuren 6, 7 und 8 nachfolgend erläutert. Die Spanneinheit 2 ist hier als ein Unterbauzylinder ausgeführt, der über einen Befestigungsflansch 42 auf der Oberfläche eines Drehtischs 5 lösbar befestigt ist, beispielsweise über Schraubverbindungen oder über mehrere zwischengeordnete Säulen, die mit geeigneten Adapterelementen zur lösbaren Befestigung des Befestigungsflanschs 42 auf dem Drehtisch 5 ausgebildet sind. Der Drehtisch 5 rotiert, bzw. verdreht sich, relativ zur Konsole 4, die räumlich stillstehen kann oder über einen Schlitten axial verfahrbar und/oder verkippbar entlang bzw. um eine oder mehrere Achsen sein kann. Die erste Übertragungseinrichtung 6 ist mit der Konsole 4 fest verbunden und stellt, zumindest in Bezug auf die Konsole 4, einen Stator dar. Eine zweite Übertragungseinrichtung 7 ist mit der Spanneinheit 2 verbunden und stellt durch deren Anbringung auf dem Drehtisch 5 einen Rotor dar. Die erste Übertragungseinrichtung 6 und die zweite Übertragungseinrichtung 7 sind also relativ zueinander verdrehbar um die Drehachse D des Drehtischs 5 angeordnet. Hierzu sind verschiedene prinzipiell unterschiedliche Ausführungsformen denkbar (siehe Figuren 1-4). Zwischen der ersten Übertragungseinrichtung 6 und der zweiten Übertragungseinrichtung 7 ist elektrische Energie zum Antrieb eines Elektromotors 16, der in die Spanneinheit 2 integriert ist, berührungslos, insbesondere induktiv, übertragbar. Alternativ oder zusätzlich sind Sensorsignale, die von in der Spanneinheit 2 integrierten Sensoreinrichtungen 39, 40, 41 erzeugt werden, zwischen der zweiten Übertragungseinrichtung 7 und der ersten Übertragungseinrichtung 6 berührungslos, insbesondere induktiv oder kapazitiv, übertragbar. Jedenfalls erfolgt die Kopplung zur Energie- und/oder Signalübertragung zwischen den Übertragungseinrichtungen 6, 7 berührungslos über einen Übertragungsspalt 9. Für eine induktive Kopplung wirken in den Übertragungseinrichtungen 6, 7 angeordnete und zueinander geeignet ausgerichtete und aufeinander angepasste Primär- bzw. Sekundärspulen paarweise induktiv zusammen.

Figur 1 zeigt eine Ausführungsform einer Übertragungsanordnung 1 mit exzentrisch, also außerhalb der Drehachse D des Drehtischs 5 bzw. der Mittelachse M der Spanneinheit 2, angeordneten Übertragungseinrichtungen 6, 7. Die zweite Übertragungseinrichtung 7 ist hier außen am Außengehäuse 12 an einem mittleren Gehäuseelement 52 oberhalb des Befestigungsflanschs 42 angebracht, könnte aber auch zumindest teilweise in das Außengehäuse 12 integriert bzw. in diesem aufgenommen sein. Bei einer Rotation der Spanneinheit 2 besteht zumindest zeitweise ein Übertragungsspalt 9 zwischen der ersten und zweiten Übertragungseinrichtung 6, 7, über den die Kopplung, d.h. die Energie- und/oder Signalübertragung, erfolgen kann. Die erste Übertragungseinrichtung 6 ist hier als ein außen am Umfang der Spanneinheit 2 positionierter Stator ausgeführt, der beispielsweise einen ringsegmentförmigen Abschnitt mit einer an den Radius des Außengehäuses 12 angepassten Umfangsfläche 62 aufweist. Die zweite Übertragungseinrichtung 7 weist eine Umfangsfläche 72 auf, wobei sich zwischen den Umfangsflächen 62, 72 ein radialer Übertragungsspalt 9 erstreckt, der zwischen 0,1 und 10 mm, vorzugsweise zwischen 0,5 und 5 mm, und besonders bevorzugt zwischen in etwa 1 mm breit ist. Es können mehrere zweite Übertragungseinrichtungen 7 über den Umfang der Spanneinheit 2 verteilt angeordnet sein, wobei jede Übertragungseinrichtung 7 dasselbe oder unterschiedliche Signale oder elektrische Energie zur Stromversorgung des Elektromotors 16 und/oder eines Akkus 80 übertragen können.

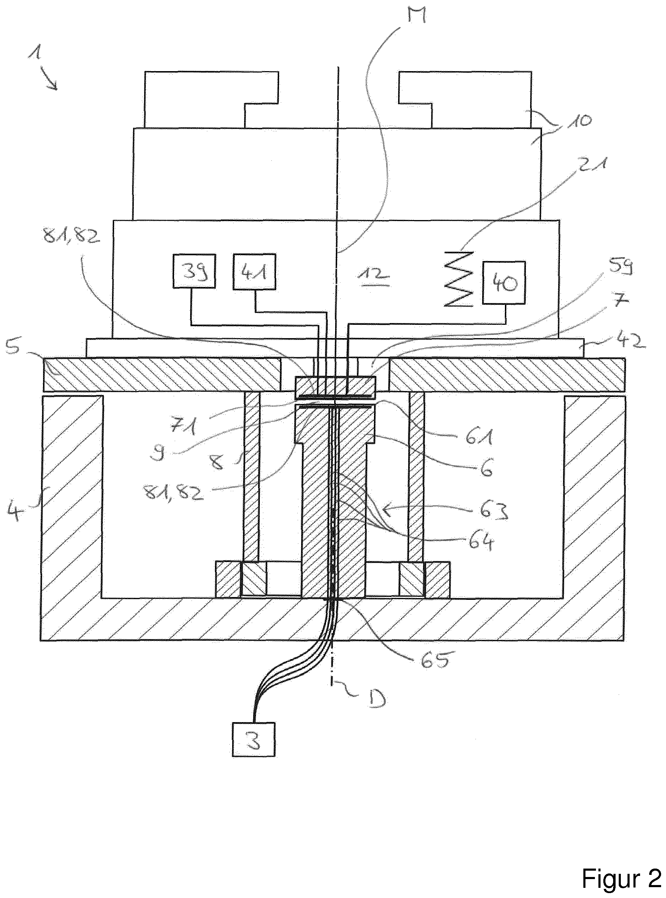

Figur 2 zeigt eine Ausführungsform der Übertragungsanordnung 1, bei der erste und die zweite Übertragungseinrichtungen 6, 7 koaxial zur Drehachse D bzw. zur Mittelachse M, aber axial versetzt, angeordnet sind und die berührungslose Kopplung über Stirnflächen 61, 71 erfolgt. Zwischen den Stirnflächen 61, 71 ist ein senkrecht zur Drehachse D verlaufender axialer Übertragungsspalt 9 ausgebildet, über den die berührungslose Übertragung von elektrischer Energie und/oder Signalen erfolgt. In bzw. hinter den Stirnflächen 62, 72 können jeweils mehrere Primärspulen 81 und/oder Sekundärspulen 82 angeordnet sein, so dass über eine Stirnfläche, beispielsweise sektorenweise oder radial bereichsweise, verschiedene Signale, insbesondere in verschiedene Richtungen, übertragen werden können. Der Übertragungsspalt 9 kann durch eine Anpassung der Längen der ersten und der zweiten Übertragungseinrichtungen 6, 7 in axialer Richtung konstruktiv in beliebigen Abständen positioniert werden. Er kann insbesondere bis zur Unterseite der Spanneinheit 2 bzw. in diese hinein, oder weiter von dem Drehtisch 5 weg, in Richtung des unteren Teils der Konsole 4, verschoben werden.

Der Drehtisch 5 weist eine Aussparung 59 auf, in die die zweite Übertragungseinrichtung 7 von oben eintaucht. Der Drehtisch 5 wird über eine Hohlwelle 8 angetrieben, wobei ein sich axial erstreckender Übertragungsschafft 63 der ersten Übertragungseinrichtung 6 in das Innere der Hohlwelle 8 hineinragt bzw. ganz in dieser aufgenommen ist. Von der Stirnfläche 61 der ersten Übertragungseinrichtung 6, insbesondere einer Primär- oder Sekundärspule 81, 82 verlaufen mehrere Leitungen 64 zur Leitung von elektrischer Energie und/oder Sensorsignalen zu einem unteren Ende der Übertragungseinrichtung 6, wo die Leitungen über Steckverbindungen 65 an eine Maschinensteuerungseinheit 3 angeschlossen sind. Die Leitungen sind beispielsweise als Kabel oder als ein Bussystem ausgeführt. Der Übertragungsschafft 63 weist einen kleineren kreisförmigen Querschnitt als die kreisförmige Stirnfläche 61 auf, wodurch eine große Übertragungsfläche zur zweiten Übertragungseinrichtung 7 und gleichzeitig eine schlanke bzw. kompakte Bauform der Übertragungsanordnung 1 erreicht wird.

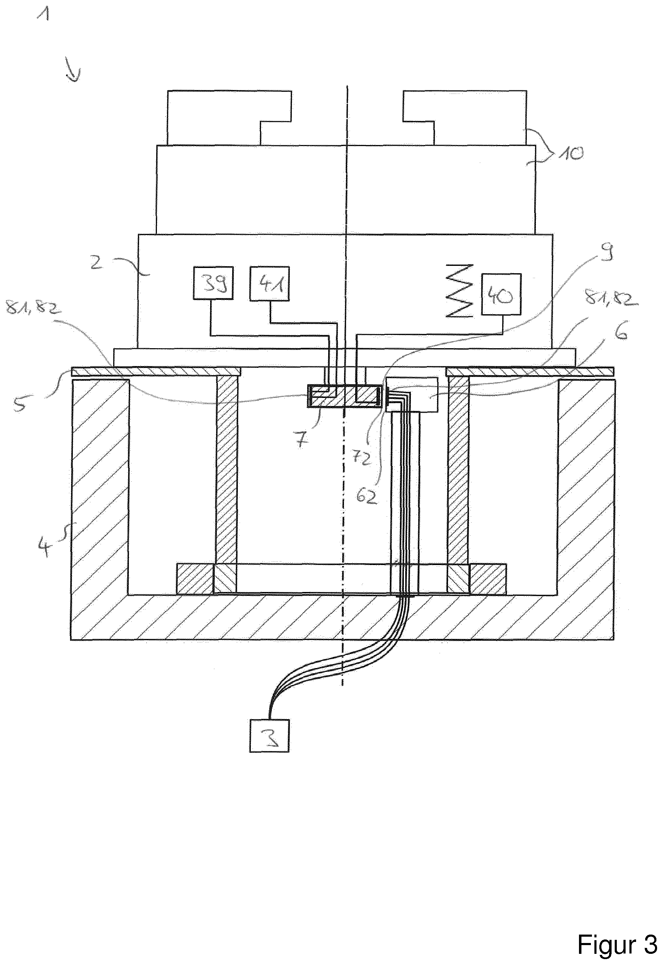

Figur 3 zeigt eine Ausführungsform der Übertragungsanordnung 1, bei der erste und zweite Übertragungseinrichtungen 6, 7 koaxial zur Drehachse D bzw. zur Mittelachse M, aber axial überlappend bzw. teilweise ineinander, angeordnet sind und die berührungslose Kopplung über Umfangsflächen 62, 72 erfolgt. Hier stellt die erste Übertragungseinrichtung 6 eine äußere Übertragungseinrichtung dar, die die zweite Übertragungseinrichtung 7 als eine innere Übertragungseinrichtung zumindest teilweise in sich aufnimmt, so dass zwischen einer ersten Umfangsfläche 62 und einer zweiten Umfangsfläche 72 ein sich parallel zur Drehachse D erstreckender radialer Übertragungsspalt 9 ausgebildet wird. Es sind auch Ausführungsformen denkbar, in der die erste Übertragungseinrichtung 6 eine innere Übertragungseinrichtung und die zweite Übertragungseinrichtung 7, beispielsweise durch eine Ausführung mit einem zentralen Hohlraum, insbesondere als Hohlzylinder, eine äußere Übertragungseinrichtung darstellt. Zusätzlich zu der Kopplung über Umfangsflächen 62, 72 könnte auch eine Kopplung über Stirnflächen 61, 71 realisiert sein. Durch die axiale Überlappung der ersten und der zweiten Übertragungseinrichtungen 6, 7 kann die Größe der zur induktiven Kopplung geeigneten Umfangsfläche eingestellt werden.

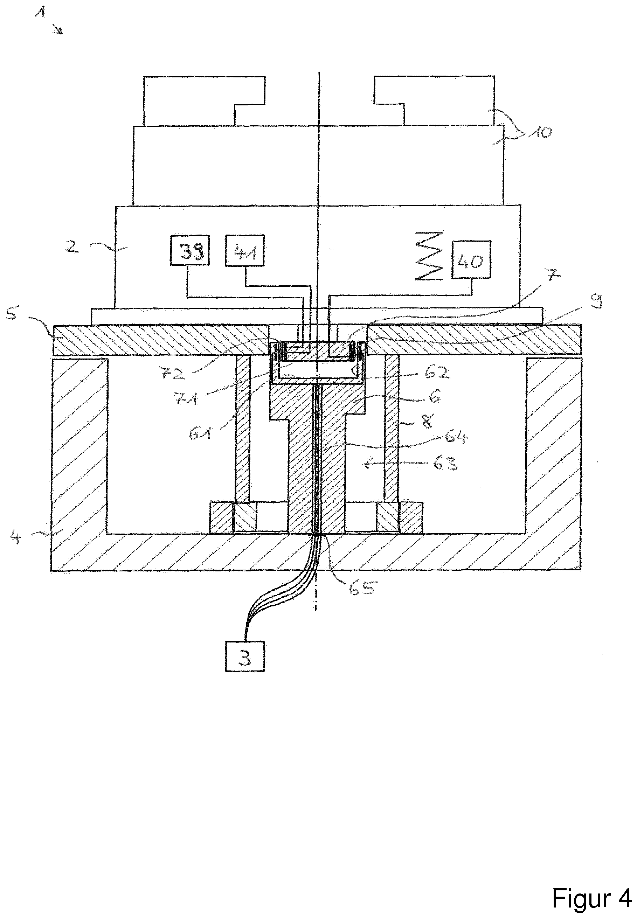

Figur 4 zeigt eine Anordnung der ersten und zweiten Übertragungseinrichtungen 6, 7, bei der die zweite Übertragungseinrichtung 7 kreiszylinderförmig ausgebildet ist und koaxial zur Mittelachse M der Spanneinheit 2 unterhalb des unteren Gehäuseelements 51 angeordnet ist. Exzentrisch zur Drehachse D bzw. der Mittelachse M ist eine erste Übertragungseinrichtung 6 angeordnet, wobei die berührungslose, insbesondere induktive, Kopplung über Umfangsflächen 62, 72 - ähnlich wie in Bezug auf Figur 1 - beschrieben, stattfindet. Im Unterschied zur Anordnung in Figur 1 besteht hier aber dauerhaft ein Übertragungsspalt 9 konstanter Breite, so dass, abhängig von der konkreten Anordnung von Primär- und Sekundärspulen 81, 82 in den Übertragungseinrichtungen 6, 7, eine kontinuierliche Übertragung von elektrischer Energie und/oder Signalen möglich ist. Die Übertragungseinrichtung 6 kann im Inneren der Konsole 4 befestigt sein, so dass die Bewegungsfreiheit und Zugänglichkeit der Spanneinheit 2 nicht durch einen geeignet zur umlaufenden zweiten Übertragungseinrichtung 7 ausgerichtete statische erste Übertragungseinrichtung 6 (wie in Figur 1) beeinträchtigt wird. Außerdem sind die Übertragungseinrichtungen 6, 7 auf diese Weise, beispielsweise von anfallenden Spänen oder abfließender Kühlflüssigkeit aus dem Arbeitsraum des Bearbeitungszentrums, geschützt.

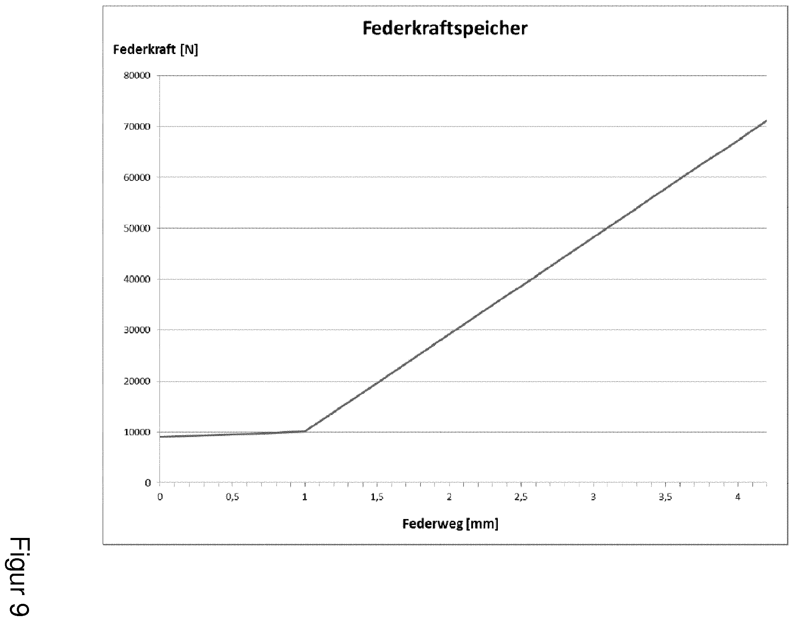

Innerhalb der Spanneinheit 2 der in den Figuren 1-4 dargestellten Übertragungsanordnungen 1 sind Sensoreinrichtungen 39, 40, 41 angeordnet. Diese Sensoreinrichtungen umfassen Arretiersensormittel 39, Sensoreinrichtungen 40 zur Erfassung einer Verstellposition des Innengehäuses 15 relativ zum Außengehäuse 12 oder einer von dem Federkraftspeicher 21 ausgeübte Spannkraft und Sensoreinrichtungen 41 zur Erfassung der Umdrehungszahl des Elektromotors 16, einer Abtriebswelle 20 und/oder der Getriebemittel 17, 18, 19. Die Sensoreinrichtungen 39, 40, 41 erzeugen jeweils entsprechende Sensorsignale, die über eine leitende Verbindung, insbesondere durch entsprechende Durchgangsöffnungen, von den Sensoreinrichtungen 39, 40, 41 zur zweiten Übertragungseinrichtung 7 gesendet werden. Beispielsweise erzeugen die Arretiersensormittel 39 ein Verriegelungs- und ein Entriegelungssignal, das ein digitales Signal ist, beispielsweise von 0 oder 24 V. Sensoreinrichtungen 40 umfassen beispielsweise einen linearen Positionssensor, der die Verstellposition, also die Relativverschiebung, des Innengehäuses 15 zum Außengehäuse 12 erfasst und ein entsprechendes Wegsignal an die zweite Übertragungseinrichtung 7 sendet. Zusätzlich oder alternativ kann ein Kraftsensor in bzw. an dem Federkraftspeicher 21 vorgesehen sein, um eine tatsächlich momentan wirkende Spannkraft, die die Spanneinheit 2 zum Spannen eines Werkstücks oder eines Werkzeugs aufbringt, erfasst und als ein Kraftsignal an die zweite Übertragungseinrichtung 7 sendet. Ein Wegsignal wird im Allgemeinen abhängig von dem gespannten Werkstück sein, während ein Kraftsignal beispielsweise einen Rückschluss darüber zulässt, ob ein Nachspannen des Werkstücks erforderlich ist, beispielsweise weil sich während der Bearbeitung durch Vibration oder eine elastische Verformung am Werkstück die ursprünglich eingestellte Spannkraft verändert hat. Es ist auch denkbar, aufgrund einer bekannten Kraft-Feder-Kennlinie des Federkraftspeichers 21 (siehe Figur 9), aus einem gemessenen Wegsignal, beispielsweise in einer Signalverarbeitungseinheit, ein entsprechendes Kraftsignal zu bestimmen. Die von der Sensoreinrichtung 40 erzeugten Signale sind vorzugsweise analoge Messsignale, die beispielsweise zwischen 4 und 20 mA betragen. Es sind auch Sensoreinrichtungen 41 denkbar, die die Umdrehungszahl des Elektromotors 16 bzw. der Getriebemittel 17, 18, 19 erfassen und beispielsweise über bekannte Gewindesteigungen, Rückschlüsse auf einen zurückgelegten Verschiebungsweg zulassen. Die Sensoreinrichtungen 39, 40, 41 senden ihre Sensorsignale an eine einzige zweite Übertragungseinrichtung 7, die Komponenten zur Aufbereitung der Messsignale umfasst. Die erste Übertragungseinrichtung 6 kann auch Komponenten zur Auswertung, Verarbeitung oder Aufbereitung von Sensorsignalen aufweisen. In einer bevorzugten Ausführungsform werden zwischen der ersten und der zweiten Übertragungseinrichtung 6, 7 ein digitales Verriegelungssignal, ein digitales Entriegelungssignal, sowie eine analoges Kraftsignal von der zweiten Übertragungseinrichtung 7 zu der ersten Übertragungseinrichtung 6 übertragen. Außerdem wird eine Gleichspannung, beispielsweise von 24 V, insbesondere zur Versorgung der Sensoreinrichtungen 39, 40, 41, und/oder zur Ansteuerung, insbesondere des elektromagnetischen Aktuators der Betätigungseinrichtung 30, von der ersten Übertragungseinrichtung 6 zu der zweiten Übertragungseinrichtung 7 übertragen. Von der ersten Übertragungseinrichtung 6 können die berührungslos übertragenen Signale an eine Maschinensteuerungseinheit 3 des Bearbeitungszentrums, insbesondere des Dreh- und/oder Fräszentrums, weitergeleitet werden, um dort beispielsweise angezeigt, überwacht oder analysiert zu werden.

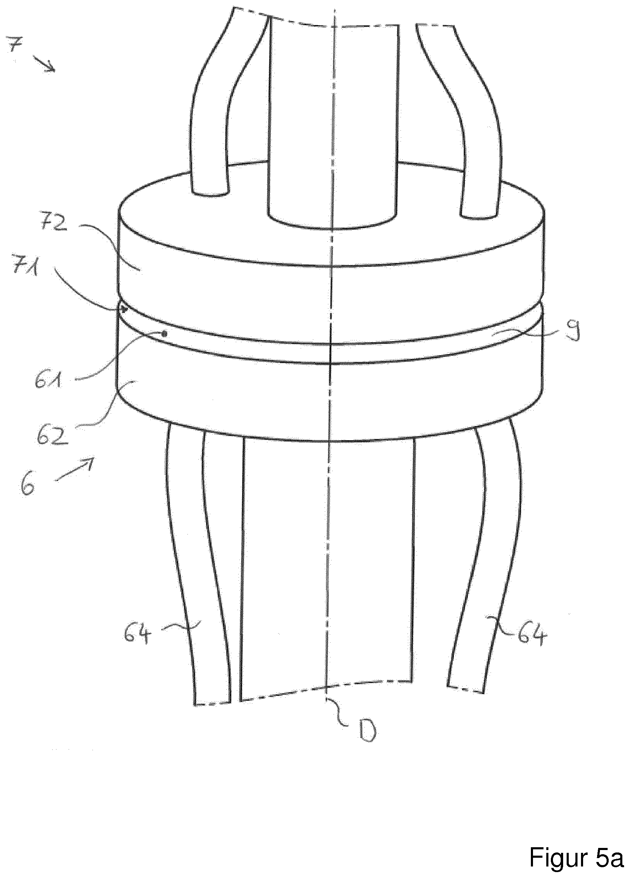

Figur 5a zeigt eine Detailansicht einer Ausführungsform der ersten und zweiten Übertragungseinrichtung 6,7 mit einer Kopplung über Stirnflächen 61, 71, wie im Zusammenhang mit Figur 2 beschrieben.

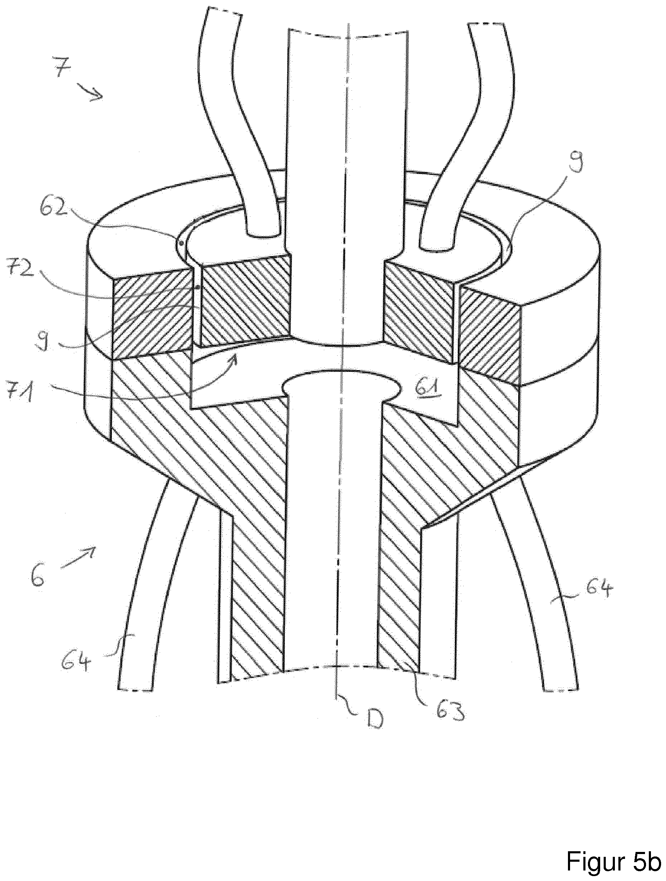

Figur 5b zeigt eine Detailansicht einer Ausführungsform der ersten und zweiten Übertragungseinrichtung 6, 7 mit einer Kopplung über Umfangsflächen 62, 72, wie im Zusammenhang mit Figur 4 beschrieben. Leitungen 64 verlaufen hier außerhalb des Übertragungsschafts 63.

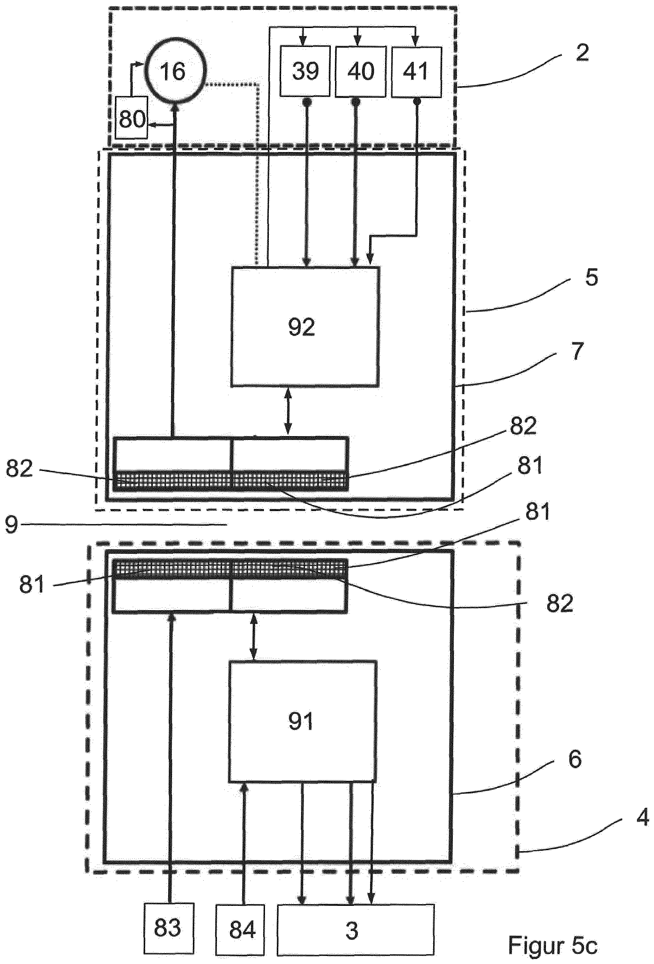

In Figur 5c ist eine Ausführungsform der erfindungsgemäßen Übertragungsanordnung in einem Blockschaltbild dargestellt. Wie mit Bezug auf die Figuren 1 bis 5b zuvor beschrieben, werden zwischen der ersten Übertragungseinrichtung 6 und der zweiten Übertragungseinrichtung 7 Energie und Sensorsignale berührungslos, insbesondere induktiv, übertagen. Die erste Übertragungseinrichtung 6 steht relativ zur Konsole 4 still, während die zweite Übertragungseinrichtung 7 fest mit dem Drehtisch 5 und der Spanneinheit 2 verbunden ist und relativ zur ersten Übertragungseinrichtung 6 rotiert. Elektrische Energie wir von einer Stromversorgung 83 zu einer Primärspule 81 der ersten Übertragungseinrichtung 6 geleitet und über den Übertragungsspalt 9 zu einer Sekundärspule 82 der zweiten Übertragungseinrichtung 7 berührungslos übertragen. Von dort wird die Energie zur Versorgung des Akkus 80, vorzugsweise einem Lithium-Ionen-Akku, und/oder des Elektromotors 16 in die Spanneinheit 2 geleitet. Der Elektromotor, der vorzugsweise als Gleichstrommotor ausgeführt ist, kann auf diese Weise beispielsweise mit einer Spannung von 48 bis 150 V versorgt werden und eine Leistung von beispielsweise bis zu 4kW, unter Umständen aber auch mehr, zum Spannen bereitstellen.

Von einer vorzugsweise separaten Stromversorgung 84 wird Energie, vorzugsweise eine Spannung von 24 V, zur Versorgung der Aufbereitungseinheiten 91, 92, der Sensoreinrichtungen 39, 40, 41 und/oder zur Schaltung der Arretiereinrichtung 28, die beispielsweise eine auf einem Elektromagneten basierende Betätigungseinrichtung 30 umfasst, von der ersten Übertragungseinrichtung 6 an die zweite Übertragungseinrichtung 7 berührungslos über Primär- und Sekundärspulen 81,82 übertragen. Von den Sensoreinrichtungen 39, 40, 41 werden erzeugte Sensorsignale in umgekehrter Richtung, also von der zweiten Übertragungseinrichtung 7 an die zweite Übertragungseinrichtung 6 berührungslos übertragen, wobei die zweite Aufbereitungseinheit 92, die insbesondere als Logik-Aufbereitungseinheit zur Aufbereitung von Sensorsignalen ausgebildet ist, die eingegebenen Sensorsignale in serielle Signale umwandelt, die über den Übertragungsspalt 9 berührungslos übertragbar sind. Die erste Aufbereitungseinheit 91, die insbesondere als Logik-Aufbereitungseinheit zur Aufbereitung von Sensorsignalen ausgebildet ist, erzeugt aus den übertragenen seriellen Signalen wieder Sensorsignale, die an die Maschinensteuerung 3 weitergeleitet werden. Sensorsignale können jeweils digital oder analog, beispielsweise mit entweder 0 bis 10 V oder 4 bis 20 mA, sein und insbesondere auch als inkrementelle Signale ausgebildet sein. Der Elektromotor 16 kann mit der zweiten Aufbereitungseinheit 92 signalleitend verbunden sein.

In Figur 6 ist eine perspektivische Ansicht einer Ausführungsform einer erfindungsgemäßen Spanneinheit veranschaulicht. Die Spanneinheit umfasst zunächst ein aus einem unteren Außengehäuseelement 51, einem mittleren Außengehäuseelement 52 sowie einem oberen Außengehäuseelement 53 zusammengesetztes Außengehäuse 12. Das untere Außengehäuseelement 51 bildet an seiner Unterseite einen Befestigungsflansch 42 aus. Am oberen Außengehäuse 53 ragt ein oberer Halsabschnitt 43 eines Innengehäuses 15 in eine Öffnung 44 des oberen Außengehäuseelements 53 bzw. des Außengehäuses 12. Der Halsabschnitt 43 des Innengehäuses 15 definiert ebenfalls eine Öffnung 45 mit einer im Wesentlichen elliptischen Querschnittsform. In dieser Öffnung 45 ist ein Innenzylinder 11 geführt, der in seinem distalen oberen Abschnitt eine an die elliptische Form der Öffnung 45 angepasste, ebenfalls elliptische Querschnittsform aufweist.

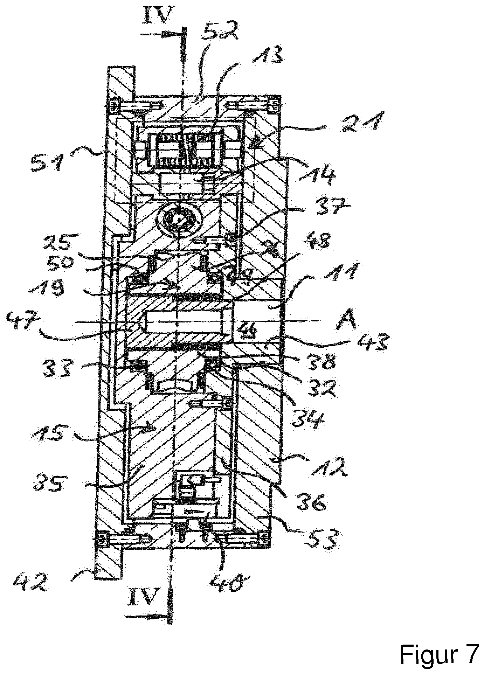

In Figur 7 ist eine Schnittansicht der Ausführungsform in Figur 6 dargestellt. Aus dieser Schnittansicht wird ersichtlich, wie das Innengehäuse 15 im Außengehäuse 12 aufgenommen ist. Konkret stützt es sich über Federn 13, 14 unterschiedlicher Bauart, nämlich konkret über eine Mehrzahl von Spiralfedern 13 sowie eine Mehrzahl von Gasdruckfedern 14 am Außengehäuse 12 ab derart, dass das Innengehäuse in Verstellrichtung A, allerdings jeweils gegen die durch die Federn 13, 14 bereitgestellte Gegenkraft, verschieblich gelagert ist. Durch die verschiebliche Lagerung des Innengehäuses 15 im Außengehäuse 12 unter Überwindung der von den Federn 13, 14 bereitgestellten Gegenkraft wird ein Federkraftspeicher 21 definiert.

Um das Innengehäuse 15 im Außengehäuse 12 entlang der Verstellrichtung A zu führen, können Führungen bereitgestellt sein, wobei in der vorliegenden Ausführungsform die Führung durch den bereits erwähnten Halsabschnitt 43 innerhalb der Öffnung 44 des Außengehäuses 12 definiert ist.

Innerhalb des Innengehäuses 15 ist der bereits erwähnte Innenzylinder 11, der in Stellrichtung A verstellbar ausgebildet ist, gelagert. Der Innenzylinder 11 ist bei der vorliegenden Ausführungsform mehrteilig ausgebildet und weist einen ersten oberen Abschnitt 46 sowie einen zweiten unteren Abschnitt 47 auf.

Am ersten oberen Abschnitt 46 ist der Innenzylinder 11 mit dem bereits erwähnten elliptischen Querschnitt ausgestaltet. Der zweite untere Abschnitt 47 des Spannzylinders weist hingegen einen kreisrunden Querschnitt und an seinem Außenumfang zumindest abschnittsweise ein Außengewinde 48 auf. Erster Abschnitt 46 und zweiter Abschnitt 47 können lösbar, insbesondere über eine Schraubverbindung oder auf andere geeignete Weise miteinander verbunden werden. Alternativ ist es auch möglich, den ersten, oberen Abschnitt 46 und zweiten, unteren Abschnitt 47 einstückig miteinander verbunden auszubilden.

Das am zweiten, unteren Abschnitt 47 vorgesehene Außengewinde 48 greift in ein entsprechend ausgestaltetes Innengewinde 38 eines Schneckenrades 25, das insofern ein erstes Teilelement eines Hülsengewindetriebs 19 bildet, ein. Der mit Außengewinde 48 versehene zweite, untere Abschnitt 47 bildet dementsprechend ein zum ersten Teilelement des Hülsengewindetriebs 19 korrespondierendes zweites Teilelement. Das Schneckenrad 25 weist an seinem Außenumfang eine Schneckenverzahnung auf, die mit einer Schnecke 24 eines Schneckengetriebes 18 zusammenwirkt. Um das Schneckenrad 25 in axialer und radialer Richtung innerhalb des Innengehäuses 15 zu stabilisieren, weist das Schneckenrad 25 eine obere Lagerfläche 32 sowie eine untere Lagerfläche 33 auf, über die es sich über Kugeln 34 an entsprechenden Lagerflächen 49, 50 des Innengehäuses 15 abstützt.

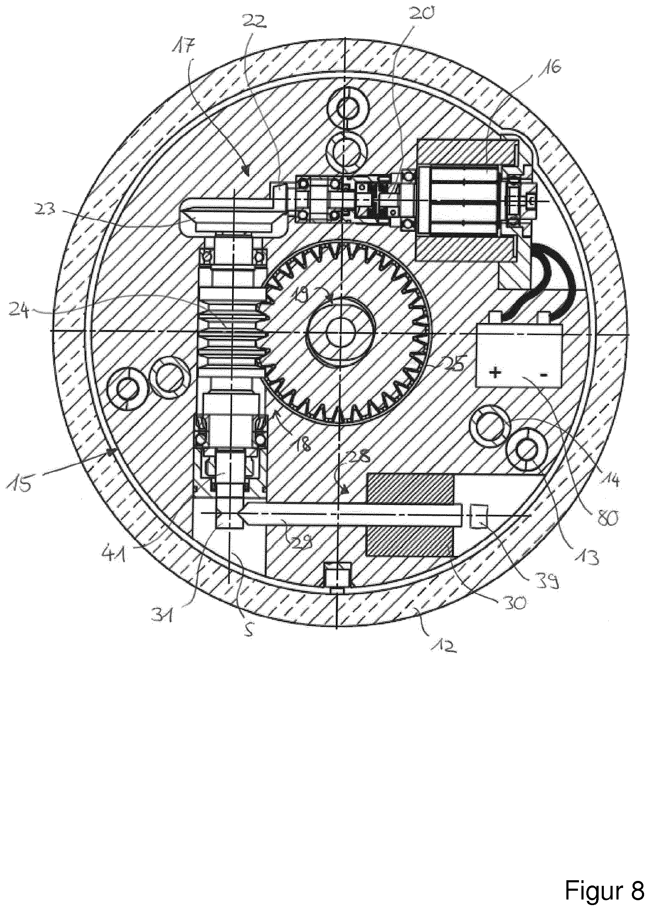

Aus der Schnittansicht nach Figur 7 wird auch deutlich, dass das Innengehäuse 15 mehrteilig ausgebildet ist, nämlich in der vorliegenden Ausgestaltung konkret ein Gehäusegrundelement 35 sowie einen Gehäusedeckel 36 umfasst, wobei Gehäusegrundelement 35 und Gehäusedeckel 36 über Verbindungselemente 37, insbesondere Verbindungsschrauben, aneinander befestigt sind. Durch diesen Aufbau wird eine einfache Montierbarkeit der Spanneinheit gewährleistet. Es können nämlich im Montagevorgang die verschiedenen Einzelkomponenten, wie beispielsweise das mit dem Innenzylinder 11 versehene Schneckenrad 25, die Federn 13, 14, sowie die weiteren anhand von Figur 8 näher beschriebenen Komponenten, wie der Akku 80 und die Sensoreinrichtungen 39, 40, 41, in das Gehäusegrundelement 35 eingesetzt und mindestens teilweise bereits durch Fixierung des Gehäusedeckels 36 fixiert werden, wie beispielsweise zumindest die Federn 13, 14 und das Schneckenrad 25.

Figur 8 zeigt eine Ausführungsform der erfindungsgemäßen Spanneinheit 2 in einer Schnittansicht mit einem Akku bzw. Akkumulator 80. Der Akku 80, insbesondere ein Lithium-Ionen-Akku, ist innerhalb der Spanneinheit 2 aufgenommen und elektrisch leitend mit dem Elektromotor 16 verbunden. Der Akku 80 kann berührungslos, insbesondre induktiv, über erste und zweite Übertragungseinrichtungen 6, 7 aufgeladen oder entladen werden, insbesondere während einer rotierenden Spanneinheit 2. Zum Auf- bzw. Entladen ist der Akku 80 über Kabel oder eine Platine mit der zweiten Übertragungseinrichtung 7 verbunden. Mithilfe des Akkus 80 kann die Spanneinheit 2 auch Spannvorgänge mit einer hohen Leistungsaufnahme durchführen, wenn beispielsweise die induktiv übertragbare Leistung nicht ausreicht um den Elektromotor 16 anzutreiben, um eine gewünschte hohe Spannkraft in einer vertretbaren Zeitspanne zu erreichen. In diesem Fall kann die elektrische Energie, die in dem Akku 80 gespeichert ist, die elektrische Leistung,
die von der ersten Übertragungseinrichtung 6 an die zweite Übertragungseinrichtung 7 zum Antrieb des Elektromotors 16 induktiv übertragen wird, ergänzen, um eine bestimmte erforderliche elektrische Leistung für den Elektromotor 16 bereitzustellen.

Unter Bezugnahme auf Figur 8 wird ersichtlich, dass im Innengehäuse 15 ein Elektromotor 16 angeordnet ist, der über eine Abtriebswelle 20 eine Drehbewegung auf ein Zahnradgetriebe 17 überträgt. Das Zahnradgetriebe 17 umfasst ein motorseitiges Zahnrad 22 sowie ein abtriebsseitiges Zahnrad 23, das drehmomentschlüssig mit der Schnecke 24 des Schneckengetriebes 18 verbunden ist. Die Schnecke 24 greift in das bereits erwähnte Schneckenrad 25 ein und versetzt dieses bei Betätigung des Elektromotors 16 in eine Drehbewegung. Die Schnecke 24 kann derart ausgebildet sein, dass sie selbsthemmend wirkt, d.h. auch bei einer vom Innenzylinder 11 auf den Hülsengewindetrieb 19 übertragenen Axialkraft eine Drehbewegung des Schneckenrads 25 verhindert wird. Alternativ oder zusätzlich kann aber auch eine Arretiereinrichtung 28 mit einer hier elektromagnetisch arbeitenden Betätigungseinrichtung 30 vorgesehen sein. In der Betätigungseinrichtung 30 ist ein axial verlagerbarer Stift 29 gelagert, der entlang seiner Längsachse von der in Figur 8 gezeigten Blockierstellung, bzw. Verriegelungsstellung, in eine zurückgezogene Position, bzw. eine Entriegelungsstellung, und vice versa überführbar ist. In der in der Figur 8 gezeigten Blockierstellung greift der axial verlagerbare Stift 29 in eine Ausnehmung in einen Wellenfortsatz 31, der drehmomentschlüssig mit der Schnecke 24 verbunden ist, ein und blockiert somit die Getriebemittel 17 bis 19, insbesondere die Schnecke 24.

Weiterhin sind Arretiersensormittel 39 vorgesehen, über die feststellbar ist, ob sich der axial verlagerbare Stift 29 in Arretierposition oder in zurückgezogener Position befindet.

Nachfolgend soll nun noch ein Spannvorgang beschrieben werden, wobei unter einem Spannvorgang sowohl eine axiale Verstellung des Innenzylinders 11 in Stellrichtung A bzw. entgegen der Stellrichtung A als auch eine Verschiebung des Innengehäuses 15 unter Beaufschlagung der Federn 13, 14 zur Erzeugung einer im so definierten Federkraftspeicher 21 vorgehaltenen Federkraft verstanden werden soll: Wird der Elektromotor 16 in Drehbewegung versetzt, treibt die Abtriebswelle 20 über das Zahnradgetriebe 17 die Schnecke 24 des Schneckengetriebes 18 an, die ihre Drehbewegung auf das Schneckenrad 25 und damit auf den Hülsengewindetrieb 19 überträgt. Durch Drehung des ersten Teilelements des Hülsengewindetriebs 19 relativ zum zweiten Teilelement des Hülsengewindetriebs 19 wird der Innenzylinder 11 axial versetzt, beispielsweise in eine Richtung aus dem Außengehäuse 12 heraus. Trifft der Innenzylinder 11 auf eine Gegenkraft, beispielsweise wenn die Spanneinheit mit einem aufgesetzten Spannfutter 10 zusammenwirkt und ein Werkstück bereits an Spannbacken des Spannfutters 10 anliegt, bewirkt eine weitere Beaufschlagung des Innenzylinders 11, dass die Kraft, mit der das Werkstück eingespannt ist, erhöht wird. Dabei bewirkt nun eine weitere Kraftbeaufschlagung des Innenzylinders 11 nach außerhalb des Innengehäuses 15, dass das Innengehäuse 15 sich innerhalb des Außengehäuses 12 gegen die Wirkung der Federn 13, 14 in entgegengesetzter Richtung verlagert und so im Federkraftspeicher 21 eine Gegenkraft erzeugt wird. Über Sensoreinrichtungen 40 ist die Verschiebebewegung des Innengehäuses 15 relativ zum Außengehäuse 12 erfassbar und damit indirekt auch die im Federkraftspeicher 21 eingestellte Gegenkraft. Ist ein gewünschter Kraftwert erreicht, wird der Elektromotor 16 stillgesetzt und die Getriebemittel 17 bis 19 werden blockiert, entweder durch eine durch die Schnecke 24 vorgegebene Selbstarretierung und/oder durch die bereits erwähnten Arretiermittel 28, 29.

Um die Drehbewegungen des Elektromotors 16, der Abtriebswelle 20 oder der Getriebemittel 17 bis 19 zu erfassen, können Sensoreinrichtungen 41 vorgesehen sein, die beispielsweise komplette Umdrehungszahlen über eine geeignete Sensorik, beispielsweise unter Ausnützung des Hall-Effekts, erfassen.

Unter Bezugnahme auf Figur 9 wird veranschaulicht, wie die verschiedenen Federn 13, 14 unterschiedlicher Bauart sich in ihren Federcharakteristika überlagern derart, dass schon bei geringem Verstellweg eine relativ große Gegenkraft bereitgestellt wird, wobei dies bei geringen Verstellwegen vorwiegend den Gasdruckfedern geschuldet ist. Bei größeren Verstellwegen kommen dann die Spiralfedern ins Spiel, so dass sich ab einem gewissen Federweg eine deutlich ansteigende Federkraft ergibt. Es versteht sich von selbst, dass durch geeignete Kombination der Federcharakteristika von Gasdruckfedern und Spiralfedern sich eine gewünschte Federcharakteristik in weitem Maße einstellen lässt.

Eine erfindungsgemäße Übertragungsanordnung 1 hat den Vorteil, dass eine große Bewegungsfreiheit für die Bearbeitung eines Werkstücks, insbesondere bei einer rotierenden Spanneinheit 2, möglich ist. Außerdem ist eine Überwachung und Ansteuerung der Spanneinheit 2 durch die berührungslose Signalübertragung auch während eines Bearbeitungsvorgangs möglich, wodurch die Arbeitssicherheit und die Bearbeitungsgenauigkeit erhöht werden. Darüber hinaus wird durch die erfindungsgemäße Anordnung von ersten und zweiten Übertragungseinrichtungen 6, 7 eine gute Zugänglichkeit und einfache Bedienbarkeit der Spanneinheit 2 beim Spannen eines Werkstücks oder Werkzeugs gewährleistet.

### Bezugszeichenliste

- 1: Übertragungsanordnung
- 2: Spanneinheit
- 3: Maschinensteuerungseinheit
- 4: Konsole
- 5: Drehtisch
- 6: erste Übertragungseinrichtung
- 7: zweite Übertragungseinrichtung
- 8: Hohlwelle
- 9: Übertragungsspalt
- 10: Spannfutter
- 11: Innenzylinder
- 12: Außengehäuse
- 13: Feder, Spiralfeder
- 14: Feder, Gasdruckfeder
- 15: Innengehäuse
- 16: Elektromotor
- 17: Getriebemittel, Zahnradgetriebe
- 18: Getriebemittel, Schneckengetriebe
- 19: Getriebemittel, Hülsengewindetrieb
- 20: Abtriebswelle (Motor)
- 21: Federkraftspeicher
- 22: motorseitiges Zahnrad
- 23: abtriebsseitiges Zahnrad
- 24: Schnecke
- 25: Schneckenrad
- 28: Arretiereinrichtung
- 29: axial verlagerbarer Stift
- 30: Betätigungseinrichtung
- 31: Wellenfortsatz
- 32: obere Lagerfläche
- 33: untere Lagerfläche
- 34: Kugeln
- 35: Gehäusegrundelement
- 36: Gehäusedeckel
- 37: Verbindungselemente
- 38: Innengewinde
- 39: Arretiersensormittel
- 40: Sensoreinrichtungen (Federkraftspeicher)
- 41: Sensoreinrichtungen (Elektromotor, Getriebemittel)
- 42: Befestigungsflansch
- 43: Halsabschnitt
- 44: Öffnung (Außengehäuse)
- 45: Öffnung (Halsabschnitt des Innengehäuses)
- 46: erster, oberer Abschnitt
- 47: zweiter, unterer Abschnitt
- 48: Außengewinde
- 49, 50: Lagerflächen
- 51: unteres Außengehäuseelement
- 52: mittleres Außengehäuseelement
- 53: oberes Außengehäuseelement
- 59: Aussparung
- 61: Stirnfläche
- 62: Umfangsfläche
- 63: Übertragungsschaft
- 64: Leitung
- 65: Steckverbindung
- 71: Stirnfläche
- 72: Umfangsfläche
- 80: Akku
- 81: Primärspule
- 82: Sekundärspule
- 83, 84: Stromversorgung
- 91: erste Aufbereitungseinheit
- 92: zweite Aufbereitungseinheit
- D: Drehachse
- M: Mittelachse

## Patentansprüche

1. Übertragungsanordnung, insbesondere zur Energie- und/oder Signalübertragung, insbesondere zur Verwendung in einem Bearbeitungszentrum bzw. einem Dreh- und/oder Fräszentrum, umfassend:
- eine Spanneinheit (2), die ein Außengehäuse (12) von vorzugsweise zylindrischer Grundform, ein im Außengehäuse (12) aufgenommenes Innengehäuse (15) sowie einen im Innengehäuse (15) in einer Stellrichtung A verstellbar gehaltenen Innenzylinder (11), der dazu ausgebildet ist, eine Druck- oder Zugkraft zu Spannzwecken zu übertragen, umfasst,
wobei sich das Innengehäuse (15) über Federn (13, 14) gegen das Außengehäuse (12) abstützt und in Stellrichtung A gegenüber dem Außengehäuse (12) verschieblich gelagert ist und so einen Federkraftspeicher (21) ausbildet,
wobei innerhalb der Spanneinheit (2) integriert ein Elektromotor (16) angeordnet ist, um über zwischengeordnete Getriebemittel (17-20) den Innenzylinder (11) mit einer Kraft in Stellrichtung A zu beaufschlagen,
- eine Konsole (4) mit einem darin drehbar gelagerten Drehtisch (5),
- mindestens eine erste Übertragungseinrichtung (6), die mit der Konsole (4) verbunden ist, und
- mindestens eine zweite Übertragungseinrichtung (7), die mit der Spanneinheit (2) verbunden ist,
wobei die Spanneinheit (2) lösbar auf dem Drehtisch (5) befestigt ist und erste und zweite Übertragungseinrichtung (6, 7) dazu ausgebildet sind, elektrische Energie zum Antrieb des Elektromotors (16) berührungslos, vorzugsweise induktiv, zwischen einer ersten Übertragungseinrichtung (6) und einer zweiten Übertragungseinrichtung (7) zu übertragen.

2. Übertragungsanordnung, insbesondere zur Energie- und/oder Signalübertragung, insbesondere nach Anspruch 1, umfassend:
- eine Spanneinheit (2), die ein Außengehäuse (12) von vorzugsweise zylindrischer Grundform, ein im Außengehäuse (12) aufgenommenes Innengehäuse (15) sowie einen im Innengehäuse (15) in einer Stellrichtung A verstellbar gehaltenen Innenzylinder (11), der dazu ausgebildet ist, eine Druck- oder Zugkraft zu Spannzwecken zu übertragen, umfasst,
wobei sich das Innengehäuse (15) über Federn (13, 14) gegen das Außengehäuse (12) abstützt und in Stellrichtung A gegenüber dem Außengehäuse (12) verschieblich gelagert ist und so einen Federkraftspeicher (21) ausbildet,
wobei innerhalb der Spanneinheit (2) integriert ein Elektromotor (16) angeordnet ist, um über zwischengeordnete Getriebemittel (17-20) den Innenzylinder (11) mit einer Kraft in Stellrichtung A zu beaufschlagen,
- eine Konsole (4) mit einem darin drehbar gelagerten Drehtisch (5),
- mindestens eine erste Übertragungseinrichtung (6), die mit der Konsole (4) verbunden ist, und
- mindestens eine zweite Übertragungseinrichtung (7), die mit der Spanneinheit (2) verbunden ist,
wobei die Spanneinheit (2) lösbar auf dem Drehtisch (5) befestigt ist und Sensoreinrichtungen (39, 40, 41) umfasst, und
wobei erste und zweite Übertragungseinrichtungen (6, 7) dazu ausgebildet sind, von den Sensoreinrichtungen (39, 40, 41) erzeugte Signale berührungslos, vorzugsweise induktiv, zwischen einer ersten Übertragungseinrichtung (6) und einer zweiten Übertragungseinrichtung (7) zu übertragen.

3. Übertragungsanordnung nach Anspruch 1 oder 2, **dadurch gekennzeichnet, dass** innerhalb der Spanneinheit (2) integriert ein Akku (80), insbesondere ein Lithium-Ionen-Akku, angeordnet ist, wobei insbesondere elektrische Energie zum Auf- und/oder Entladen des Akkus (80) berührungslos, vorzugsweise induktiv, zwischen einer ersten Übertragungseinrichtung (6) und einer zweiten Übertragungseinrichtung (7) übertragbar ist.

4. Übertragungsanordnung nach einem der vorherigen Ansprüche, **dadurch gekennzeichnet, dass** erste und zweite Übertragungseinrichtungen (6, 7) Primär- bzw. Sekundärspulen (81, 82) aufweisen, die insbesondere jeweils paarweise zusammenwirken, um
- elektrische Energie von einer ersten Übertragungseinrichtung (6) zu einer zweiten Übertragungseinrichtung (7) und/oder
- Sensorsignale, insbesondere Verriegelungs-, Entriegelungs-, Kraft-, Weg- und/oder Drehzahlsignale, von einer zweiten Übertragungseinrichtung (7) zu einer ersten Übertragungseinrichtung (6),
insbesondere induktiv, zu übertragen.

5. Übertragungsanordnung nach einem der vorherigen Ansprüche, **dadurch gekennzeichnet, dass** eine zweite Übertragungseinrichtung (7) exzentrisch zu einer Mittelachse (M) der Spanneinheit (2), insbesondere seitlich am Außengehäuse (12), an bzw. in der Spanneinheit (2) angeordnet ist.

6. Übertragungsanordnung nach einem der vorherigen Ansprüche, **dadurch gekennzeichnet, dass** eine zweite Übertragungseinrichtung (7) koaxial zu einer Mittelachse (M) der Spanneinheit (2), insbesondere unterhalb, vorzugsweise an einem unteren Außengehäuseelement (51), an der Spanneinheit (2) angeordnet ist.

7. Übertragungsanordnung nach einem der vorherigen Ansprüche, **dadurch gekennzeichnet, dass** eine erste Übertragungseinrichtung (6) und eine zweite Übertragungseinrichtung (7), vorzugsweise kreisrunde oder ringförmige, Stirnflächen (61, 71) aufweisen, zwischen denen ein, insbesondere axialer, Übertragungsspalt (8) ausgebildet ist.

8. Übertragungsanordnung nach einem der vorherigen Ansprüche, **dadurch gekennzeichnet, dass** die erste Übertragungseinrichtung (6) und die zweite Übertragungseinrichtung (7) Umfangsflächen (62, 72) aufweisen, zwischen denen ein, insbesondere radialer, Übertragungsspalt (8) ausgebildet ist.

9. Übertragungsanordnung nach einem der vorherigen Ansprüche, **dadurch gekennzeichnet, dass** eine einzige erste Übertragungseinrichtung (6) und eine einzige zweite Übertragungseinrichtung (7) vorgesehen sind, um elektrische Energie zum Antrieb des Elektromotors (16), elektrische Energie zum Auf- und/oder Entladen des Akkus (80) und/oder mindestens ein Sensorsignal zu übertragen.

10. Übertragungsanordnung nach einem der vorherigen Ansprüche, **dadurch gekennzeichnet, dass** die erste und/oder die zweite Übertragungseinrichtung (6, 7) rotationssymmetrische, vorzugsweise kreiszylindrische, Grundform haben.

11. Übertragungsanordnung nach einem der vorherigen Ansprüche, **dadurch gekennzeichnet, dass** die erste Übertragungseinrichtung (6) einen sich axial erstreckenden Übertragungsschaft (63), vorzugsweise mit geringerem Querschnitt als eine Stirnfläche (61) der ersten Übertragungseinrichtung (6) aufweist, in dem mehrere Leitungen (64) zur Leitung von elektrischer Energie und/oder Sensorsignalen, beispielsweise Kabel oder ein Bussystem, angeordnet sind.

12. Übertragungsanordnung nach einem der vorherigen Ansprüche, **dadurch gekennzeichnet, dass** der Drehtisch (5) über eine Hohlwelle (8) angetrieben wird, in die die erste Übertragungseinrichtung (6), insbesondere der Übertragungsschaft (63), hineinragt.

13. Übertragungsanordnung nach einem der vorherigen Ansprüche, **dadurch gekennzeichnet, dass** der Drehtisch (5) eine zentrale, vorzugsweise kreiszylinderförmige, Aussparung (59) aufweist, in die die erste Übertragungseinrichtung (6) und/oder die zweite Übertragungseinrichtung (7) hineinragen bzw. hineinragt.

14. Übertragungsanordnung nach einem der vorherigen Ansprüche, **dadurch gekennzeichnet, dass** die Breite des Übertragungsspalts (9) zwischen 0,1 mm und 10 mm, vorzugsweise zwischen 0,5 mm und 5mm und besonders bevorzugt in etwa 1 mm beträgt.

15. Übertragungsanordnung nach einem der Ansprüche, 2 bis 14 **dadurch gekennzeichnet, dass** die Sensoreinrichtungen (39, 40, 41) und die zweite Übertragungseinrichtung (7) signalleitend miteinander verbunden sind, insbesondere über Kabel, die durch Öffnungen in dem Außen- und/oder Innengehäuse hindurch geführt sind.

16. Übertragungsanordnung nach einem der vorherigen Ansprüche, **dadurch gekennzeichnet, dass** sich das Innengehäuse (15) über eine Mehrzahl von Federn (13, 14) unterschiedlicher Bauart, insbesondere über ein oder mehrere Spiralfedern (13) und über ein oder mehrere Gasdruckfedern (14) am Außengehäuse (12) abstützt.

17. Übertragungsanordnung nach einem der vorherigen Ansprüche, **dadurch gekennzeichnet, dass** eine Arretiereinrichtung (28) vorgesehen ist, um die Getriebemittel (17 - 19) bedarfsweise, insbesondere in Ruhestellung der Antriebsvorrichtung (16), zu arretieren.

18. Übertragungsanordnung nach einem der Ansprüche, 2 bis 17 **dadurch gekennzeichnet, dass** die Sensoreinrichtungen (39, 40, 41)
- Arretiersensormittel (39) umfassen, wobei die Arretiersensormittel (39) ausgebildet und bestimmt sind zu überprüfen, ob eine Arretiereinrichtung (28) in Arretierstellung ist, und ein entsprechendes Verriegelungs- oder Entriegelungssignal an die zweite Übertragungseinrichtung (7) zu senden und/oder
- Sensoreinrichtungen (40) umfassen, die ausgebildet und bestimmt sind, die Verstellposition des Innengehäuses (15) innerhalb des Außengehäuses (12) und/oder die im Federkraftspeicher (21) vorgehaltene Gegenkraft zu erfassen, und ein entsprechendes Weg- und/oder Kraftsignal an die zweite Übertragungseinrichtung (7) zu senden, und/oder
- Sensoreinrichtungen (41) umfassen, die ausgebildet und bestimmt sind, die Drehbewegung des Elektromotors (16), einer Abtriebswelle (20) und/oder der Getriebemittel (17 - 19), insbesondere die jeweilige Umdrehungszahl, zu erfassen, und ein entsprechendes Drehzahlsignal an die zweite Übertragungseinrichtung (7) zu senden.

## Claims

1. Transmission arrangement, in particular for energy and/or signal transmission, in particular for use in a machining center or a turning and/or milling center, comprising:
- a clamping unit (2) comprising an outer housing (12) of a preferably cylindrical basic shape, an inner housing (15) received within the outer housing (12), as well as an inner cylinder (11) held within the inner housing (15) so as to be adjustable in a positioning direction A and configured to transmit a compressive or tensile force for clamping purposes,
wherein the inner housing (15) is supported on the outer housing (12) via springs (13, 14) and is mounted to be displaceable with respect to the outer housing (12) in the positioning direction A and thus forms a spring force accumulator (21),
wherein an electric motor (16) is arranged to be integrated within the clamping unit (2) in order to apply a force in the positioning direction A to the inner cylinder (11) via intermediate gear means (17 - 20),
- a console (4) with a rotary table (5) mounted therein to be rotatable,
- at least one first transmission device (6) associated with the console (4), and
- at least one second transmission device (7) associated with the clamping unit (2),
wherein the clamping unit (2) is detachably attached on the rotary table (5), and said first and second transmission devices (6, 7) being configured to transmit electrical energy for driving the electric motor (16) in a non-contact, preferably inductive manner between a first transmission device (6) and a second transmission device (7).

2. Transmission arrangement, in particular for energy and/or signal transmission, in particular according to claim 1, comprising:
- a clamping unit (2) comprising an outer housing (12) of a preferably cylindrical basic shape, an inner housing (15) received within the outer housing (12), as well as an inner cylinder (11) held within the inner housing (15) so as to be adjustable in a positioning direction A and configured to transmit a compressive or tensile force for clamping purposes,
wherein the inner housing (15) is supported on the outer housing (12) via springs (13, 14) and is mounted to be displaceable with respect to the outer housing (12) in the positioning direction A and thus forms a spring force accumulator (21),
wherein an electric motor (16) is arranged to be integrated within the clamping unit (2) in order to apply a force in the positioning direction A to the inner cylinder (11) via intermediate gear means (17-20),
- a console (4) with a rotary table (5) mounted therein to be rotatable,
- at least one first transmission device (6) associated with the console (4), and
- at least one second transmission device (7) associated with the clamping unit (2),
wherein the clamping unit (2) is detachably attached on the rotary table (5) and comprises sensor devices (39, 40, 41), and
said first and second transmission devices (6, 7) being configured to transmit signals generated by the sensor devices (39, 40, 41) in a non-contact, preferably inductive manner between a first transmission device (6) and a second transmission device (7).

3. Transmission arrangement according to claim 1 or 2, **characterized in that** an accumulator (80), in particular a lithium ion accumulator is arranged to be integrated within the clamping unit (2), wherein in particular electrical energy for charging and/or discharging the accumulator (80) may be transmitted in a non-contact, preferably inductive manner between a first transmission device (6) and a second transmission device (7).

4. Transmission arrangement according to any one of the preceding claims, **characterized in that** first and second transmission devices (6, 7) respectively exhibit primary and secondary coils (81, 82) each cooperating in particular in pairs, in order to transmit
- electrical energy from a first transmission device (6) to a second transmission device (7) and/or
- sensor signals, in particular locking, unlocking, force, path and/or speed signals from a second transmission device (7) to a first transmission device (6)
in a preferably inductive manner.

5. Transmission arrangement according to any one of the preceding claims, **characterized in that** a second transmission device (7) is arranged on or within the clamping unit (2) to be off-center to a center axis (M) of the clamping unit (2), in particular laterally on the outer housing (12).

6. Transmission arrangement according to any one of the preceding claims, **characterized in that** a second transmission device (7) is arranged on the clamping unit (2) to be coaxial to a center axis (M) of the clamping unit (2), in particular below, preferably on a lower outer housing element (51).

7. Transmission arrangement according to any one of the preceding claims, **characterized in that** a first transmission device (6) and a second transmission device (7) preferably exhibit circular or annular front faces (61, 71) between which an in particular axial transmission gap (8) is formed.

8. Transmission arrangement according to any one of the preceding claims, **characterized in that** the first transmission device (6) and the second transmission device (7) exhibit circumferential surfaces (62, 72) between which an in particular radial transmission gap (8) is formed.

9. Transmission arrangement according to any one of the preceding claims, **characterized in that** a single first transmission device (6) and a single second transmission device (7) are provided to transmit electrical energy for driving the electric motor (16), electrical energy for charging and/or discharging the accumulator (80) and/or at least one sensor signal.

10. Transmission arrangement according to any one of the preceding claims, **characterized in that** the first and/or the second transmission device (6, 7) have a rotation-symmetrical, preferably circular cylindrical basic shape.

11. Transmission arrangement according to any one of the preceding claims, **characterized in that** the first transmission device (6) exhibits an axially extending transmission shaft (63) having preferably a smaller cross-section than a front surface (61) of the first transmission device (6), in which a plurality of lines (64) for conducting electrical energy and/or sensor signals, for example cables or a bus system are arranged.

12. Transmission arrangement according to any one of the preceding claims, **characterized in that** the rotary table (5) is driven by a hollow shaft (8) into which the first transmission device (6), in particular the transmission shaft (63) protrudes.

13. Transmission arrangement according to any one of the preceding claims, **characterized in that** the rotary table (5) exhibits a central, preferably circular cylindrical recess (59) into which the first transmission device (6) and/or the second transmission device (7) protrude(s).

14. Transmission arrangement according to any one of the preceding claims, **characterized in that** the width of the transmission gap (9) is between 0.1 mm and 10 mm, in particular between 0,5 mm and 5 mm, and particularly preferred approximately 1 mm.

15. Transmission arrangement according to any one of the claims 2 to 14, **characterized in that** the sensor devices (39, 40, 41) and the second transmission device (7) are interconnected in a signal conducting manner, in particular via cables guided through openings in the outer and/or inner housing.

16. Transmission arrangement according to any one of the preceding claims, **characterized in that** the inner housing (15) is supported on the outer housing (12) via a plurality of springs (13, 14) of different types, in particular via one or more spiral springs (13) or via one or more gas pressure springs (14).

17. Transmission arrangement according to any one of the preceding claims, **characterized in that** a locking device (28) is provided for locking the gear means (17 - 19) as required in particular in the rest position of the drive means (16).

18. Transmission arrangement according to any one of the claims 2 to 17, **characterized in that** the sensor devices (39, 40, 41) comprise
- locking sensor devices (39), wherein the locking sensor devices (39) are configured and intended to check whether a locking device (28) is in locking position and to send a corresponding locking or unlocking signal to the second transmission device (7), and/or
- sensor devices (40) which are configured and intended to detect the adjusted position of the inner housing (15) within the outer housing (12) and/or the counterforce stored in the spring force accumulator (21) and to send a corresponding path and/or force signal to the second transmission device (7), and/or
- sensor devices (41) which are configured and intended to detect the rotational movement of the electric motor (16), an output shaft (20) and/or the gear means (17 - 19), in particular the respective number of rotations and to send a corresponding speed signal to the second transmission device (7).

## Revendications

1. Agencement de transmission, en particulier pour la transmission d'énergie et/ou de signal, en particulier pour l'utilisation dans un centre d'usinage ou un centre de tournage et/ou de fraisage, comprenant :
- une unité de serrage (2), qui comprend un carter extérieur (12) de forme de base de préférence cylindrique, un carter intérieur (15) logé dans le carter extérieur (12) ainsi qu'un cylindre intérieur (11) maintenu de façon réglable dans une direction de positionnement A dans le carter intérieur (15) et constitué pour transmettre une force de pression ou de traction à des fins de serrage,
sachant que le carter intérieur (15) prend appui contre le carter extérieur (12) via des ressorts (13, 14) et est monté de façon translatable en direction de positionnement A par rapport au carter extérieur (12) et constitue ainsi un accumulateur de force de ressort (21),
sachant qu'un électromoteur (16) est disposé de façon intégrée à l'intérieur de l'unité de serrage (2) pour soumettre le cylindre intérieur (11) à une force en direction de positionnement A via des moyens d'engrenage (17-20) intercalés,
- une console (4) avec une table rotative (5) montée de façon rotative dans celle-ci,
- au moins un premier dispositif de transmission (6) qui est relié à la console (4), et
- au moins un deuxième dispositif de transmission (7) qui est relié à l'unité de serrage (2),
sachant que l'unité de serrage (2) est fixée de façon détachable sur la table rotative (5) et
le premier et le deuxième dispositif de transmission (6, 7) sont constitués de façon à transmettre sans contact, de préférence de façon inductive, de l'énergie électrique pour l'entraînement de l'électromoteur (16) entre un premier dispositif de transmission (6) et un deuxième dispositif de transmission (7).

2. Agencement de transmission, en particulier pour la transmission d'énergie et/ou de signal, en particulier selon la revendication 1, comprenant :
- une unité de serrage (2), qui comprend un carter extérieur (12) de forme de base de préférence cylindrique, un carter intérieur (15) logé dans le carter extérieur (12) ainsi qu'un cylindre intérieur (11) maintenu de façon réglable dans une direction de positionnement A dans le carter intérieur (15) et constitué pour transmettre une force de pression ou de traction à des fins de serrage,
sachant que le carter intérieur (15) prend appui contre le carter extérieur (12) via des ressorts (13, 14) et est monté de façon translatable en direction de positionnement A par rapport au carter extérieur (12) et constitue ainsi un accumulateur de force de ressort (21),
sachant qu'un électromoteur (16) est disposé de façon intégrée à l'intérieur de l'unité de serrage (2) pour soumettre le cylindre intérieur (11) à une force en direction de positionnement A via des moyens d'engrenage (17-20) intercalés,
- une console (4) avec une table rotative (5) montée de façon rotative dans celle-ci,
- au moins un premier dispositif de transmission (6) qui est relié à la console (4), et
- au moins un deuxième dispositif de transmission (7) qui est relié à l'unité de serrage (2),
sachant que l'unité de serrage (2) est fixée de façon détachable sur la table rotative (5) et comprend des dispositifs de capteur (39, 40, 41), et
sachant que le premier et le deuxième dispositif de transmission (6, 7) sont constitués pour transmettre sans contact, de préférence de façon inductive, des signaux générés par les dispositifs de capteur (39, 40, 41) entre un premier dispositif de transmission (6) et un deuxième dispositif de transmission (7).

3. Agencement de transmission selon la revendication 1 ou 2, **caractérisé en ce qu'**une batterie (80), en particulier une batterie à ions de lithium, est disposée de façon intégrée à l'intérieur de l'unité de serrage (2), sachant qu'en particulier de l'énergie électrique est apte à être transmise sans contact, de préférence de façon inductive, entre un premier dispositif de transmission (6) et un deuxième dispositif de transmission (7) pour la charge et/ou la décharge de la batterie (80).

4. Agencement de transmission selon l'une des revendications précédentes, **caractérisé en ce qu'**un premier et un deuxième dispositif de transmission (6, 7) présentent des bobines primaires ou secondaires (81, 82) qui interagissent en particulier par paires respectivement, pour transmettre, en particulier de façon inductive,
- de l'énergie électrique d'un premier dispositif de transmission (6) à un deuxième dispositif de transmission (7) et/ou
- des signaux de capteur, en particulier des signaux de verrouillage, de déverrouillage, de force, de course et/ou de vitesse de rotation, d'un deuxième dispositif de transmission (7) à un premier dispositif de transmission (6).

5. Agencement de transmission selon l'une des revendications précédentes, **caractérisé en ce qu'**un deuxième dispositif de transmission (7) est disposé de façon excentrique par rapport à un axe médian (M) de l'unité de serrage (2), en particulier latéralement au niveau du carter extérieur (12), au niveau de ou dans l'unité de serrage (2).

6. Agencement de transmission selon l'une des revendications précédentes, **caractérisé en ce qu'**un deuxième dispositif de transmission (7) est disposé de façon coaxiale par rapport à un axe médian (M) de l'unité de serrage (2), en particulier en-dessous, de préférence au niveau d'un élément inférieur de carter extérieur (51), au niveau de l'unité de serrage (2).

7. Agencement de transmission selon l'une des revendications précédentes, **caractérisé en ce qu'**un premier dispositif de transmission (6) et un deuxième dispositif de transmission (7) présentent des faces frontales (61, 71) de préférence de forme circulaire ou annulaire, entre lesquelles une fente de transmission (8), en particulier axiale, est constituée.

8. Agencement de transmission selon l'une des revendications précédentes, **caractérisé en ce que** le premier dispositif de transmission (6) et le deuxième dispositif de transmission (7) présentent des faces circonférentielles (62, 72) entre lesquelles une fente de transmission (8), en particulier radiale, est constituée.

9. Agencement de transmission selon l'une des revendications précédentes, **caractérisé en ce qu'**un seul premier dispositif de transmission (6) et un seul deuxième dispositif de transmission (7) sont prévus pour transmettre de l'énergie électrique pour l'entraînement de l'électromoteur (16), de l'énergie électrique pour la charge et/ou la décharge de la batterie (80) et/ou au moins un signal de capteur.

10. Agencement de transmission selon l'une des revendications précédentes, **caractérisé en ce que** le premier et/ou le deuxième dispositif de transmission (6, 7) ont une forme de base symétrique en rotation, de préférence cylindrique circulaire.

11. Agencement de transmission selon l'une des revendications précédentes, **caractérisé en ce que** le premier dispositif de transmission (6) présente un fût de transmission (63) qui s'étend axialement, de préférence de section transversale moindre qu'une face frontale (61) du premier dispositif de transmission (6), dans lequel plusieurs conducteurs (64) pour la conduction d'énergie électrique et/ou de signaux de capteur, par exemple des câbles ou un système de bus, sont disposés.

12. Agencement de transmission selon l'une des revendications précédentes, **caractérisé en ce que** la table rotative (5) est entraînée via un arbre creux (8) dans lequel le premier dispositif de transmission (6), en particulier le fût de transmission (63), dépasse.

13. Agencement de transmission selon l'une des revendications précédentes, **caractérisé en ce que** la table rotative (5) présente un évidement (59) central, de préférence de forme cylindrique circulaire, dans lequel le premier dispositif de transmission (6) et/ou le deuxième dispositif de transmission (7) dépasse(nt).

14. Agencement de transmission selon l'une des revendications précédentes, **caractérisé en ce que** la largeur de la fente de transmission (9) est comprise entre 0,1 mm et 10 mm, de préférence entre 0,5 mm et 5 mm et est de manière plus préférentielle de quelque 1 mm.

15. Agencement de transmission selon l'une des revendications 2 à 14, **caractérisé en ce que** les dispositifs de capteur (39, 40, 41) et le deuxième dispositif de transmission (7) sont reliés entre eux de manière conductrice de signal, en particulier via des câbles qui sont menés en passant par des ouvertures dans le carter extérieur et/ou intérieur.

16. Agencement de transmission selon l'une des revendications précédentes, **caractérisé en ce que** le carter intérieur (15) prend appui au niveau du carter extérieur (12) via une pluralité de ressorts (13, 14) de différent types de construction, en particulier via un ou plusieurs ressorts hélicoïdaux (13) et via un ou plusieurs ressorts de pression à gaz (14).

17. Agencement de transmission selon l'une des revendications précédentes, **caractérisé en ce qu'**un dispositif d'arrêt (28) est prévu pour arrêter les moyens d'engrenage (17-19) selon les besoins, en particulier en position de repos du dispositif d'entraînement (16).

18. Agencement de transmission selon l'une des revendications 2 à 17, **caractérisé en ce que** les dispositifs de capteur (39, 40, 41)
- comprennent des moyens de capteur d'arrêt (39), sachant que les moyens de capteur d'arrêt (39) sont constitués pour et destinés à vérifier si un dispositif d'arrêt (28) est en position d'arrêt, et envoyer un signal de verrouillage ou de déverrouillage correspondant au deuxième dispositif de transmission (7) et/ou
- comprennent des dispositifs de capteur (40) qui sont constitués pour et destinés à saisir la position de déplacement du carter intérieur (15) à l'intérieur du carter extérieur (12) et/ou la force antagoniste contenue dans l'accumulateur de force de ressort (21), et envoyer un signal de course et/ou de force correspondant au deuxième dispositif de transmission (7), et/ou
- comprennent des dispositifs de capteur (41) qui sont constitués pour et destinés à saisir le mouvement de rotation de l'électromoteur (16), d'un arbre de sortie (20) et/ou des moyens d'engrenage (17-19), en particulier le nombre de tours respectif, et envoyer un signal de vitesse de rotation correspondant au deuxième dispositif de transmission (7).
